# FASCICULE DE BREVET EUROPEEN

(11) **EP 3 131 947 B1**
(45) Date de publication et mention de la délivrance du brevet: **31.01.2024**
(21) Numéro de dépôt: 15720385.2
(22) Date de dépôt: 14.04.2015
(51) Int. Cl.: C08G 69/26, C08L 77/06, C08L 77/12, B29C 70/06, C08J 5/04

(54) **COMPOSITION THERMOPLASTIQUE A BASE DE POLYAMIDE POLYMÈRE ISSU D'UN PRÉPOLYMÈRE ET D'UN ALLONGEUR DE CHAÎNE ET PROCÉDÉ DE FABRICATION**
THERMOPLASTISCHE ZUSAMMENSETZUNG AUS EINEM POLYAMIDPOLYMER, DAS AUS EINEM PREPOLYMER UND EINEM KETTENVERLÄNGERER HERGESTELLT IST, UND HERSTELLUNGSVERFAHREN
THERMOPLASTIC COMPOSITION MADE FROM A POLYAMIDE POLYMER OBTAINED FROM A PREPOLYMER AND A CHAIN EXTENDER AND MANUFACTURING METHOD

(30) Priorité: 15.04.2014 FR 1453359
(43) Date de publication de la demande: 22.02.2017
(60) Demande divisionnaire: 17191086.2
(73) Titulaire: Arkema France, 92700 Colombes (FR)
(72) Inventeur: BRIFFAUD, Thierry, 27300 Bernay (FR); HOCHSTETTER, Gilles, F-94240 L'Hay les Roses (FR); CAPELOT, Mathieu, 27300 Bernay (FR)
(74) Mandataire: Arkema Patent
(86) Numéro de dépôt international: PCT/FR2015/050999
(87) Numéro de publication internationale: WO 2015/159016

(56) Documents cités:
- EP-A1- 2 586 585
- WO-A1-2014/064375
- WO-A1-2014/064377
- CN-A- 102 234 373
- FR-A1- 2 997 036
- FR-A1- 2 997 089
- KR-A- 20080 032 357

## Description

L'invention concerne une composition comprenant au moins un polymère polyamide issu d'au moins un prépolymère polyamide réactif comprenant au moins un allongeur de chaîne, ladite composition présentant une viscosité à l'état fondu modulable en fonction de la température à laquelle ladite composition est soumise.

L'invention couvre aussi le polymère polyamide issu dudit prépolymère polyamide avec allongeur de chaîne.

L'invention couvre également l'utilisation d'un polymère polyamide issu dudit prépolymère avec ledit allongeur de chaîne, pour moduler la viscosité à l'état fondu d'une composition comprenant ledit polymère polyamide ainsi que l'utilisation de ladite composition pour l'extrusion, l'injection ou le moulage et notamment pour l'imprégnation plus aisée de fibres de renfort pour la fabrication de composite.

L'invention couvre également un procédé de fabrication de ladite composition, un procédé de fabrication d'un matériau composite, en particulier des pièces mécaniques ou de structure à base dudit matériau au moyen de ladite composition, et l'utilisation de la composition de l'invention pour des pièces de matériau composite ainsi que la pièce composite qui en résulte et pour des applications dans les domaines de : l'automobile, de l'électrique ou l'électronique, ferroviaire, marin, transport routier, de l'éolien, du sport, aéronautique et spatial, du bâtiment, des panneaux et des loisirs.

EP 0261 020 décrit l'utilisation de prépolymères semi-cristallins réactifs à base de PA 6, 11 et 12 pour la fabrication d'un composite thermoplastique par un procédé de pultrusion. Les prépolymères de structure aliphatique tels que décrits des performances mécaniques insuffisantes à chaud et sont dépourvues d'allongeur de chaîne.

EP 1 988 113 décrit une composition de moulage dépourvues d'allongeur de chaîne à base d'un copolyamide 10T/6T avec :
- 40 à 95% mol de 10T
- 5 à 40% de 6T.

EP 0581642 décrit des polymères issus de l'addition d'oligomères à terminaison di-carboxy et de bisoxazines ou de bisoxazoline dont la viscosité de solution déterminée dans le meta-crésol à 30°C à des concentrations de 0,5 g/dl est inférieure à 0,5 dl g⁻¹ mais ne précise aucune viscosité à l'état fondu.

US 2011306718 décrit un procédé de pultrusion de polyamides aliphatiques réactives de faible Tg associés à des allongeurs de chaînes de structure polymérique portant plusieurs (et bien supérieur à 2) fonctions d'anhydrides ou d'époxydes. Ce document ne décrit aucun allongeur non polymérique. L'allongeur de chaîne est additionné durant l'imprégnation des fibres.

CN 102 234 373 décrit un procédé de préparation de polyesteramides biodégradable par allongement de chaîne.

KR 2008 0032357 décrit un procédé d'augmentation du poids moléculaire de nylon en utilisant des diisocyanates bloqués comme allongeur de chaîne.

EP 2 586 585 décrit des matériaux composites thermoplastiques de Tg supérieure ou égale à 80°C, renforcés avec des fibres synthétiques.

La mise en oeuvre de compositions pour obtenir de bonnes propriétés mécaniques nécessite de disposer de polymères, notamment de polyamide avec des masse moléculaire moyenne Mn élevées. Cependant, dans le cadre du moulage, la mise en oeuvre desdits polymères nécessite également une fluidité augmentée c'est-à-dire une viscosité plus faible. Il faut alors augmenter la température de mise en oeuvre pour augmenter la fluidité ce qui provoque la dégradation dudit polymère.

Les inconvénients de l'état de l'art, avec l'absence d'un bon compromis entre les performances mécaniques et l'aptitude de mise en oeuvre (facilité de transformation) à plus basse température avec un temps de cycle de production plus court sont surmontés par la solution de la présente invention qui vise des compositions, comprenant au moins un polymère polyamide issu d'au moins un prépolymère polyamide réactif comprenant au moins un allongeur de chaîne (PA₁-AII₁-PA₁), ledit polymère polyamide étant préparé à une température T₁ supérieure ou égale à la température T_{f} ou T_{g} dudit polymère et présentant une masse moléculaire moyenne Mn₁,
caractérisée en ce que ladite composition présente une viscosité à l'état fondu modulable en fonction de la température à laquelle ladite composition est soumise, ladite température étant comprise de T₂ à T₃, T₂ et T₃ étant supérieures à T₁,
et ladite viscosité à l'état fondu η'₂ ou η'₃ observée respectivement à la température T₂ ou T₃ étant inférieure à la viscosité à l'état fondu η₂ ou η₃ dudit polymère polyamide, dépourvu d'allongeur de chaîne et de même masse moléculaire moyenne Mn₁ (PA₁) observée à la même température T₂ ou T₃,
permettant une mise en oeuvre plus facile à des températures plus basses pour une même masse moléculaire moyenne de polymère avec une économie sur le bilan global énergétique du procédé de mise en oeuvre, un temps de cycle de production plus court et une productivité améliorée, par une aptitude à la cristallisation rapide dudit polymère polyamide et tout en maintenant à un niveau élevé les performances mécaniques desdits matériaux finaux ainsi qu'une modulation de la température de mise en oeuvre pour un même polymère polyamide issu d'au moins un prépolymère polyamide réactif comprenant au moins un allongeur de chaîne en fonction de l'utilisation et des applications désirées dudit polymère polyamide.

Donc, le premier objet de l'invention concerne une composition, comprenant au moins un polymère polyamide issu d'au moins un prépolymère polyamide réactif comprenant au moins un allongeur de chaîne (PA₁-All₁-PA₁), ledit polymère polyamide étant préparé à une température T₁ supérieure ou égale à la température T_{f} ou T_{g} dudit polymère et présentant une masse moléculaire moyenne Mn₁,
caractérisée en ce que ladite composition présente une viscosité à l'état fondu modulable en fonction de la température à laquelle ladite composition est soumise, ladite température étant comprise de T₂ à T₃, T₂ et T₃ étant supérieures à T₁,
et ladite viscosité à l'état fondu η'₂ ou η'₃ observée respectivement à la température T₂ ou T₃ étant inférieure à la viscosité à l'état fondu η₂ ou η₃ dudit polymère polyamide, dépourvu d'allongeur de chaîne et de même masse moléculaire moyenne Mn₁ (PA₁) observée à la même température T₂ ou T₃.

Ladite composition est basée sur un polymère polyamide issu d'au moins un prépolymère polyamide comprenant ou constitué d'au moins un motif d'amide A avec présence optionnelle d'au moins un deuxième motif amide B différent de A et éventuellement d'au moins un troisième (C) motif amide, ces motifs étant différents les uns par rapport aux autres, et d'au moins un allongeur de chaîne.

Un deuxième objet de l'invention concerne un polymère polyamide issu dudit prépolymère polyamide sur lequel un allongeur de chaîne a été additionné, c'est-à-dire de la polymérisation dudit prépolymère polyamide sur lequel ledit allongeur de chaîne a été additionné.

Un troisième objet concerne l'utilisation d'un polymère polyamide avec un allongeur de chaîne issu dudit prépolymère avec ledit allongeur de chaîne, pour moduler la viscosité à l'état fondu d'une composition comprenant ledit polymère polyamide ainsi que l'utilisation de ladite composition pour l'extrusion, l'injection ou le moulage et notamment pour l'imprégnation plus aisée de fibres de renfort pour la fabrication de composite.

Un quatrième objet de l'invention concerne un procédé de fabrication de ladite composition.

Un autre objet de l'invention concerne un procédé de fabrication d'un matériau composite thermoplastique et plus particulièrement de fabrication de pièces mécaniques ou des pièces de structure à base dudit matériau composite.

Un autre objet de l'invention concerne l'utilisation de la composition spécifique de PA de l'invention pour la fabrication d'un matériau composite thermoplastique de même composition et plus particulièrement de pièces mécaniques ou de structure à base de ce matériau.

Un autre objet de l'invention concerne le matériau composite thermoplastique qui résulte de ladite composition pour matériau composite.

Finalement, l'invention couvre une pièce mécanique ou pièce de structure à base de matériau composite obtenu par le procédé spécifique de l'invention ou qui résulte de l'utilisation de la composition spécifique de PA de l'invention.

Donc, le premier objet concerne une composition comprenant au moins un polymère polyamide issu d'au moins un prépolymère polyamide réactif comprenant au moins un allongeur de chaîne (PA₁-All₁-PA₁), ledit polymère polyamide étant préparé à une température T₁ supérieure ou égale à la température T_{f} ou T_{g} dudit polymère et présentant une masse moléculaire moyenne Mn₁,
caractérisée en ce que ladite composition présente une viscosité à l'état fondu modulable en fonction de la température à laquelle ladite composition est soumise, ladite température étant comprise de T₂ à T₃, T₂ et T₃ étant supérieures à T₁,
et ladite viscosité à l'état fondu η'₂ ou η'₃ observée respectivement à la température T₂ ou T₃ étant inférieure à la viscosité à l'état fondu η₂ ou η₃ dudit polymère polyamide, dépourvu d'allongeur de chaîne et de même masse moléculaire moyenne Mn₁ (PA₁) observée à la même température T₂ ou T₃,
et avec :
   ladite composition comprenant ou étant constituée de un ou plusieurs polyamides, y compris copolyamides statistiques ou séquencés qui sont des polymères et lesquels comprennent des motifs amides de formule A/(B)ᵣ/(C)ₛ différents, sélectionnés comme suit :
   - A : est un motif amide répétitif choisi parmi les lactames ou un aminoacide en C₆-C₁₄, un motif amide X.Y dans lequel X représente au moins une diamine, ladite diamine étant choisie parmi une diamine aliphatique linéaire ou ramifiée, une diamine cycloaliphatique et une diamine aromatique ou un mélange de celle-ci, et Y représente au moins un diacide carboxylique, ledit diacide étant choisi parmi :
      un diacide aliphatique, un diacide cycloaliphatique et un diacide aromatique, ladite diamine et ledit diacide comprenant de 4 à 36 atomes de carbone, avantageusement de 6 à 18 atomes de carbone ;
   - B et C : sont des motifs amides répétitifs différents de A, optionnellement présents dépendant de la valeur de r et s, r = 0 ou 1, s = 0 ou 1, lesdits motifs amides B et C étant choisis parmi les mêmes constituants que pour A, à la condition que lorsque r et s =1, alors B et C sont différents,
   la somme des motifs A + B + C étant égale à 100% en poids.

La somme des taux molaires en l'absence de C se réduit à A + B = 100%, avec A et B étant complémentaires à 100%.

En l'absence de B et C, le taux molaire de A est de 100%.

Ladite composition est dépourvue de fibres de renfort ainsi que d'allongeur de chaîne polymérique.

La température T_{f} désigne la température de fusion d'un polyamide semi-cristallin et T_{g} désigne la température de transition vitreuse d'un polyamide amorphe.

On entend par l'expression « masse moléculaire moyenne Mn », la masse moléculaire en nombre Mn, notamment déterminée par chromatographie d'exclusion stérique.

(PA₁-All₁-PA₁) désigne le polymère polyamide comprenant un prépolymère polyamide réactif comprenant au moins un allongeur de chaîne. Ledit polymère polyamide peut également être de formule (All₁-PA₁-All₁-PA₁- AII₁) ou (All₁-PA₁-All₁-PA₁) c'est-à-dire avec au moins un allongeur de chaîne en position terminale.

Avantageusement, le rapport de viscosité η'₃/η₃ à l'état fondu observée à une température T₃ est inférieur au rapport η'₂/η₂ à l'état fondu observée à une température T₂, T₃≥T₂ + 10°C.

Avantageusement, le rapport de viscosité η'₃/η₃ à l'état fondu observée à une température T₃ est supérieur au rapport η'₂/η₂ à l'état fondu observée à une température T₂, T₃≤T₂ - 10°C.

Avantageusement, la composition de l'invention comprend ou est constituée d'au moins un polymère polyamide issu d'un prépolymère polyamide comprenant au moins un allongeur de chaîne.

Avantageusement, au moins un prépolymère est présent et un seul allongeur de chaîne est présent.

Avantageusement, un seul prépolymère est présent et au moins un allongeur de chaîne est présent.

Avantageusement, un seul prépolymère est présent et un seul allongeur de chaîne est présent.

Avantageusement, ledit polymère polyamide lorsqu'il est seul présent comprend ou est constitué d'un seul prépolymère et d'un seul allongeur de chaîne.

Le terme « modulable » signifie que la viscosité à l'état fondu de la composition est variable en fonction de la température à laquelle ladite composition est soumise,

Les Inventeurs ont donc trouvé de façon inattendue qu'une composition comprenant ou constituée d'au moins :
un polymère polyamide issu d'au moins un prépolymère polyamide réactif sur lequel au moins un allongeur de chaîne est présent (également dénommé dans la description : polymère polyamide avec allongeur de chaîne ou polymère polyamide avec allongeur), c'est-à-dire issu de la polymérisation dudit au moins prépolymère polyamide sur lequel au moins un allongeur de chaîne est présent,
présentait non seulement une viscosité à l'état fondu modulable en fonction de la température à laquelle elle est soumise température, mais encore des viscosités à l'état fondu inférieures par rapport à la viscosité à l'état fondu du même polymère polyamide de même masse moléculaire, mais dépourvu d'allongeur de chaîne (également dénommé dans la description : polymère polyamide sans allongeur de chaîne ou polymère polyamide sans allongeur).

En d'autres termes :
- soit un polymère polyamide avec un allongeur de chaîne (PA₁-All₁-PA1) ayant un Mn moyen égale à Mn₁,
- soit un polymère polyamide (PA₁) sans allongeur de chaîne de même Mn₁, lesdits PA₁-All₁-PA₁ et PA₁ étant préparés à n'importe quelle température T supérieure ou égale à T_{f} ou T_{g},
si l'on soumet lesdits PA₁-All₁-PA₁ et PA₁ à deux températures différentes T₂ et T₃, et T₂ et T₃ étant supérieures à T₁,
il est bien connu pour l'homme du métier que les viscosités à l'état fondu η₂ de PA₁ et η₃ de PA₁ obtenues pour des températures respectives T₂ et T₃ seront différentes, de même que les viscosités à l'état fondu η'₂ de PA₁-All₁-PA₁ et η'₃ de PA₁-All₁-PA₁ obtenues pour les températures respectives T₂ et T₃.

Cependant, de façon tout à fait inattendue, les Inventeurs ont trouvé que η'₂ était également inférieur à η₂, de même que η'₃ était inférieur à η₃ alors que les Mn₁ moyens sont identiques.

Autrement dit, la viscosité de PA₁-All₁-PA₁ est identique à celle de PA₁ mais à une température plus faible.

L'expression « PA₁-All₁-PA₁ » signifie que l'allongeur de chaîne est nécessairement intégré de manière covalente dans la chaîne du polymère polyamide et n'est pas en position terminale du polymère polyamide.

De plus, les Inventeurs ont également trouvé que les rapports de viscosités obtenues entre une composition comprenant ou constituée d'un polymère polyamide dépourvu d'allongeur de chaîne et une composition comprenant ou constituée d'un polymère polyamide avec allongeur de chaine, à deux températures différentes n'étaient pas constantes.

En d'autres termes, η'₂/η₂ ≠ η'₃/η₃ et est fonction de la température. Ainsi, η'₂/η₂ > η'₃/η₃ pour T₃ ≥ T₂ + 10°C et η'₂/η₂ < η'₃/η₃ pour T₃ ≤ T₂ - 10°C.

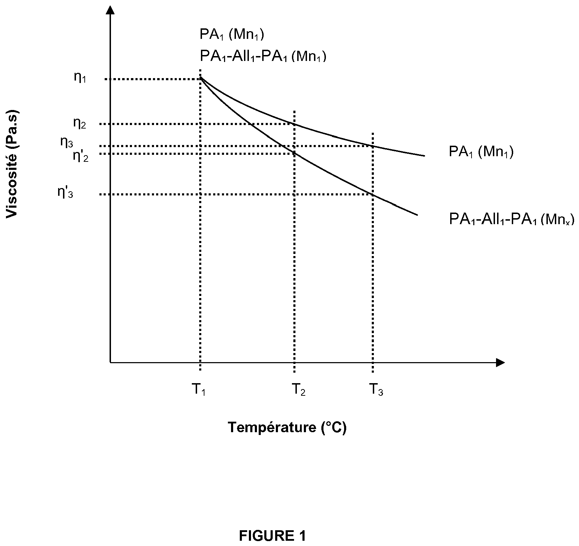

La figure 1 résume ces différentes propriétés.

Avantageusement, lorsque T₃ ≥ T₂ + 10°C, alors T₃ est au plus 350°C, en particulier au plus 320°C, notamment au plus 300°C.

Lorsque T₃ ≤ T₂ - 10°C, alors T₂ est au plus 360°C, en particulier au plus 330°C, notamment au plus 310°C.

Cette différence de viscosité obtenue entre ledit polymère polyamide avec ou sans allongeur de chaîne à la même température présente les avantages suivants :
1) mise en oeuvre de la composition comprenant ou constituée d'un polymère polyamide avec allongeur plus aisée que celle comprenant ou constituée d'un polymère polyamide sans allongeur et notamment à une température plus faible que celle de mise en oeuvre du polyamide sans allongeur de chaîne de même Mn moyen.
2) possibilité d'obtenir des compositions comprenant ou constituées d'un même polymère polyamide avec allongeur mais présentant des viscosités différentes à l'état fondu et utilisables indifféremment pour l'extrusion, l'injection ou le moulage, pour des applications variées, et permettant notamment l'imprégnation plus aisée de fibres de renfort pour la fabrication de matériau composites, en particulier des pièces mécaniques ou de structure à base dudit matériau.

### S'agissant des constituants (A), (B) et (C) :

### Motif amide répétitif aliphatique :

Dans une première variante de l'invention, le motif amide aliphatique A, B ou C est obtenu à partir d'un acide aminocarboxylique comprenant de 6 à 14 atomes de carbone. Il peut ainsi être choisi parmi l'acide 9-aminononanoïque (noté 9), l'acide 10-aminodécanoïque (noté 10), l'acide 11-aminoundécanoïque (noté 11) et l'acide 12-aminododécanoïque (noté 12), avantageusement l'acide aminocarboxylique est le l'acide 11-aminoundécanoïque.

Dans une deuxième variante de l'invention, le motif répétitif aliphatique A, B ou C est obtenu à partir d'un lactame comprenant de 6 à 14 atomes de carbone. Il peut ainsi être choisi parmi le caprolactame (noté 6), le décanolactame (noté 10), l'undécanolactame (noté 11) et le laurolactame ou lauryllactame (noté 12), avantageusement le lactame est le l'undécanolactame.

De manière plus particulièrement préférée, le motif répétitif A est obtenu à partir d'un seul acide aminocarboxylique ou d'un seul lactame.

Toutefois, on peut tout à fait envisager de mettre en oeuvre, pour l'obtention de ce même motif A, un mélange de deux ou de plusieurs acides aminocarboxyliques, un mélange de deux ou de plusieurs lactames, mais également un mélange d'un, de deux ou de plusieurs acides aminocarboxyliques avec un, deux ou plusieurs lactames.

Motif répétitif A, B ou C de type X.Y

Le motif répétitif X.Y est un motif obtenu à partir de la polycondensation d'au moins une diamine aliphatique linéaire, ou d'au moins une diamine cycloaliphatique ou d'au moins une diamine aromatique ou d'un mélange de deux ou plusieurs de celles-ci et d'au moins un diacide carboxylique aliphatique ou d'au moins un diacide carboxylique cycloaliphatique ou d'au moins un diacide carboxylique aromatique.

Les proportions molaires en diamine et en diacide carboxylique sont préférentiellement stoechiométriques.

La diamine ainsi que le diacide carboxylique comprennent chacun de 4 à 36 atomes de carbone et, avantageusement, de 6 à 18 atomes de carbone.

La diamine aliphatique utilisée pour l'obtention de ce motif répétitif X.Y est une diamine aliphatique qui présente une chaine principale linéaire comprenant au moins 4 atomes de carbone.

Cette chaine principale linéaire peut, le cas échéant, comporter un ou plusieurs substituant méthyle et/ou éthyle ; dans cette dernière configuration, on parle de "diamine aliphatique ramifiée". Dans le cas où la chaine principale ne comporte aucun substituant, la diamine aliphatique est dite "diamine aliphatique linéaire".

Qu'elle comporte ou non des substituant méthyle et/ou éthyle sur la chaine principale, la diamine aliphatique utilisée pour l'obtention de ce motif répétitif X.Y comprend de 4 à 36 atomes de carbones, avantageusement de 4 à 18 atomes de carbone, avantageusement de 6 à 18 atomes de carbone, avantageusement de 6 à 14 atomes de carbone.

Lorsque cette diamine est une diamine aliphatique linéaire, elle répond alors à la formule H₂N-(CH₂)ₓ-NH₂ et peut être choisie par exemple parmi la butanediamine, la pentanediamine, l'hexanediamine, l'heptanediamine, l'octanediamine, la nonanediamine, la décanediamine, l'undécanediamine, la dodécanediamine, la tridécanediamine, la tétradécanediamine, l'hexadécanediamine, l'octadécanediamine et l'octadécènediamine. Les diamines aliphatiques linéaires qui viennent d'être citées peuvent être toutes bio ressourcées au sens de la norme ASTM D6866.

Lorsque cette diamine est une diamine aliphatique ramifiée, elle peut notamment être la méthyl-2 pentanediamine ou la 2-méthyl-1,8-octanediamine.

La diamine cycloaliphatique peut être choisie par exemple parmi le bis(3,5-dialkyl-4-aminocyclohexyl)-méthane, le bis(3,5-dialkyl-4-aminocyclohexyl)éthane, le bis(3,5-dialkyl-4-aminocyclohexyl)-propane, le bis(3,5-dialkyl-4-aminocyclo-hexyl)-butane, le bis-(3-méthyl-4-aminocyclohexyl)-méthane ou 3'-diméthyl-4,4'-diamino-dicyclohexylméthane couramment dénommé "BMACM" ou "MACM" (et noté B ci-après), le p-bis(aminocyclohexyl)-méthane couramment dénommé "PACM" (et noté P ci-après), l'isopropylidènedi(cyclohexylamine) couramment dénommé "PACP", l'isophorone-diamine (notée IPD ci-après) et le 2,6-bis(amino méthyl)norbornane couramment dénommé "BAMN".

Une liste non-exhaustive de ces diamines cycloaliphatiques est donnée dans la publication "Cycloaliphatic Amines" (Encyclopaedia of Chemical Technology, Kirk-Othmer, 4th Edition (1992), pp. 386-405).

La diamine aromatique peut être choisie parmi la 1,3-xylylène diamine et la 1,4-xylylène diamine.

Le diacide carboxylique peut être choisi parmi les diacides carboxyliques aliphatiques, linéaires ou ramifiés, les diacides carboxyliques cycloaliphatiques et les diacides carboxyliques aromatiques.

Lorsque l'acide dicarboxylique est aliphatique et linéaire, il peut être choisi parmi l'acide succinique (4), l'acide pentanedioïque (5), l'acide adipique (6), l'acide heptanedioïque (7), l'acide octanedioïque (8), l'acide azélaïque (9), l'acide sébacique (10), l'acide undécanedioïque (11), l'acide dodécanedioïque (12), l'acide brassylique (13), l'acide tétradécanedioïque (14), l'acide hexadécanedioïque (16), l'acide octadécanedioïque (18), l'acide octadécènedioïque (18), l'acide eicosanedioïque (20), l'acide docosanedioïque (22) et les dimères d'acides gras contenant 36 carbones.

Les dimères d'acides gras mentionnés ci-dessus sont des acides gras dimérisés obtenus par oligomérisation ou polymérisation d'acides gras monobasiques insaturés à longue chaîne hydrocarbonée (tels que l'acide linoléïque et l'acide oléïque), comme décrit notamment dans le document EP 0 471 566.

Lorsque le diacide carboxylique est cycloaliphatique, il peut comporter les squelettes carbonés suivants : norbornyl méthane, cyclohexane, cyclohexylméthane, dicyclohexylméthane, dicyclohexylpropane, di(méthylcyclohexyl) ou di(méthylcyclohexyl)propane.

Lorsque le diacide carboxylique est aromatique, il peut être choisi parmi l'acide téréphtalique (noté T), l'acide isophtalique (noté I) et un acide naphtalénique.

Selon un mode de réalisation avantageux de l'invention, A est un motif amide présent à un taux molaire de 100%, et représente un motif répétitif aliphatique obtenu à partir d'un lactame ou d'un aminoacide, en particulier choisi parmi PA6, PA11 et PA 12.

Selon un mode de réalisation avantageux de l'invention, A est un motif amide présent à un taux molaire de 100%, et représente un motif amide répétitif X.Y, en particulier choisi parmi PA6.6, PA6.10, PA6.12, PA10.10 et 10.12.

Selon un mode de réalisation avantageux de l'invention, A représente un motif amide présent à un taux molaire allant de 1 à 99%, B est un motif amide différent de A, lequel motif B est présent à un taux molaire allant de 1 à 99%, et C est motif amide optionnel différent de A et de B et tel que défini ci-dessus.

Avantageusement:
- A : est un motif amide majoritaire présent à un taux molaire allant de 55 à 95%, de préférence de 55 à 85%, plus préférentiellement de 55 à 80%, choisi parmi les motifs x.T, où x est une diamine aliphatique linéaire en C₄ à C₁₈, de préférence choisi parmi en C₆, C₉, C₁₀, C₁₁ et C₁₂ et où T est l'acide téréphtalique,
- B : est un motif amide différent de A, lequel motif B est présent à un taux molaire allant de 5 à 45%, de préférence de 15 à 45%, plus préférentiellement de 20 à 45%, en fonction de la Tf du polyamide à base de motif A et ledit motif amide B est choisi parmi un motif répétitif aliphatique obtenu à partir d'un lactame ou d'un aminoacide, en particulier choisi parmi PA6, PA11 et PA 12 ou un motif amide répétitif X.Y, en particulier choisi parmi PA6.6, PA6.10, PA6.12, PA10.10 et 10.12.

Plus avantageusement,
- A : est un motif amide majoritaire présent à un taux molaire allant de 55 à 95%, de préférence de 55 à 85%, plus préférentiellement de 55 à 80%, encore plus préférentiellement de 55 à 75%, en particulier de 55 à 70%, choisi parmi les motifs x.T, où x est une diamine aliphatique linéaire en C₄ à C₁₈, de préférence en C₆, C₉, C₁₀, C₁₁, C₁₂ et où T est l'acide téréphtalique,
- B : est un motif amide différent de A, lequel motif B est présent à un taux molaire allant de 5 à 45%, de préférence de 15 à 45%, plus préférentiellement de 20 à 45%, encore plus préférentiellement de 25 à 45%, en particulier de 30 à 45%, en fonction de la Tf du polyamide à base de motif A et avec ledit motif amide B étant choisi parmi les motifs x'.T, où x' est choisi parmi :
   ∘ B1) une diamine aliphatique ramifiée portant une seule ramification (branchement signifiant la même chose) méthyle ou éthyle, de préférence méthyle, en particulier la 2-méthyl pentaméthylène diamine (MPMD) ou la 2-méthyl octaméthylène diamine (MOMD) et ayant une longueur de chaîne principale différente d'au moins deux atomes de carbone par rapport à la longueur de chaîne principale de la diamine x dudit motif A associé, de préférence x' (selon B1)) étant la MPMD ou
   ∘ B2) la m-xylylène diamine (MXD) ou
   ∘ B3) une diamine aliphatique linéaire en C₄ à C₁₈, de préférence avec une différence d'au moins deux atomes de carbone entre la chaîne de diamine x dudit motif A et la chaîne de diamine x' dudit motif B,
   et de préférence, ledit motif B est choisi parmi les motifs x'.T, où x' est la MPMD selon option B1) ou la MXD selon option B2) ou une diamine aliphatique linéaire comme définie ci-haut selon option B3) ou plus préférentiellement x' est la MPMD selon B1) ou la MXD selon B2) et encore plus préférentiellement x' est la MXD selon B2)
- C : motif amide optionnel différent de A et de B et tel que défini ci-dessus.
et sous la condition que la somme des taux molaires A + B + C soit égale à 100%.

Selon une première possibilité dans ladite composition de l'invention, ledit polymère polyamide comprend ledit motif amide selon C, différent de A et de B où le motif C comme défini ci-haut est présent. C peut être présent à un taux molaire allant jusqu'à 30%, de préférence jusqu'à 25%, de préférence jusqu'à 20%, plus préférentiellement jusqu'à 15% par rapport au taux molaire total du polyamide.

Quand le motif C est présent et qu'il correspond à x'T avec x' comme défini ci-haut pour le motif B, dans ce cas C étant différent de B par définition, ledit motif C peut être à base x' étant défini selon B1 et dans ce cas ledit motif B peut avoir x' défini selon soit B2 soit B3. Si C est à base de x' selon B2, dans ce cas le motif B peut être à base de x' étant selon B1 ou B3. Si C est à base de x' selon B3, dans ce cas le motif B peut être à base de x' étant défini selon B1 ou B2.

Plus particulièrement, dans ce motif C de ladite composition, ladite structure aromatique peut être choisie par exemple parmi la structure isophtalique et/ou naphtalènique. Une structure téréphtalique est possible en particulier pour le composant diacide quand la diamine est cycloaliphatique. Ladite structure cycloaliphatique peut être choisie parmi une structure à base de cycle cyclohexane ou une structure à base de cycle décahydronaphtalénique (structure naphtalénique hydrogénée).

De préférence, la structure de C est dérivée d'une diamine aliphatique et d'un diacide cycloaliphatique et/ou aromatique, par exemple comme définis ci-dessus ou d'un diacide et d'une diamine cycloaliphatique, par exemple comme définis ci-dessus. Plus particulièrement, ledit motif C est choisi parmi les motifs issus :
- d'une diamine cycloaliphatique et d'acide téréphtalique ou
- de diacide choisi parmi isophtalique, naphténique ou à base de cyclohexane et de diamine x ou x' comme définies ci-haut pour les motifs A et B respectivement.

Selon une autre variante de la composition de l'invention, ledit motif C est présent à un taux molaire pouvant aller jusqu'à 70%, notamment jusqu'à 40%, notamment jusqu'à 30%, de préférence jusqu'à 20% par rapport au taux molaire total du polyamide. Donc, selon cette variante, ladite composition comprend ledit motif C comme défini ci-haut, en particulier choisi parmi : les aminoacides ou lactames en C₆ à C₁₂, de préférence en C₆, C₁₁ et C₁₂ ou leurs mélanges ou les motifs issus de la réaction d'un diacide aliphatique linéaire en C₆ à C₁₈, de préférence C₆ à C₁₂ et d'une diamine aliphatique linéaire en C₆ à C₁₈, de préférence C₆ à C₁₂ et de préférence avec les motifs A et B étant respectivement à base des diamines x et x' comme définies ci-haut.

De préférence, le motif C, quand il est présent, est à un taux molaire inférieur à 40% par rapport au taux molaire total du polyamide comme défini selon l'invention.

De préférence, ledit motif amide A, comme défini selon l'invention ci-haut et ci-après, est présent à un taux molaire allant de 55 à 80%, plus préférentiellement de 55 à 75%, encore plus préférentiellement de 55 à 70%, par rapport à l'ensemble des motifs dudit polymère polyamide tel que défini ci-haut selon l'invention.

Avantageusement, la composition comprend ou est constituée des motifs A en proportion de 55 à 95% et B en proportion de 5 à 45%, la somme des taux molaires de A + B étant égale à 100%.

Avantageusement, la composition comprend ou est constituée des motifs A en proportion de 55 à 95% et B en proportion de 15 à 45%, la somme des taux molaires de A + B étant égale à 100%.

Avantageusement, la composition comprend ou est constituée des motifs A en proportion de 55 à 95% et B en proportion de 20 à 45%, la somme des taux molaires de A + B étant égale à 100%.

Avantageusement, la composition comprend ou est constituée des motifs A en proportion de 55 à 95% et B en proportion de 25 à 45%, la somme des taux molaires de A + B étant égale à 100%.

Avantageusement, la composition comprend ou est constituée des motifs A en proportion de 55 à 95% et B en proportion de 30 à 45%, la somme des taux molaires de A + B étant égale à 100%.

Avantageusement, la composition comprend ou est constituée des motifs A en proportion de 55 à 85% et B en proportion de 5 à 45%, la somme des taux molaires de A + B étant égale à 100%.

Avantageusement, la composition comprend ou est constituée des motifs A en proportion de 55 à 85% et B en proportion de 15 à 45%, la somme des taux molaires de A + B étant égale à 100%.

Avantageusement, la composition comprend ou est constituée des motifs A en proportion de 55 à 85% et B en proportion de 20 à 45%, la somme des taux molaires de A + B étant égale à 100%.

Avantageusement, la composition comprend ou est constituée des motifs A en proportion de 55 à 85% et B en proportion de 25 à 45%, la somme des taux molaires de A + B étant égale à 100%.

Avantageusement, la composition comprend ou est constituée des motifs A en proportion de 55 à 85% et B en proportion de 30 à 45%, la somme des taux molaires de A + B étant égale à 100%.

Avantageusement, la composition comprend ou est constituée des motifs A en proportion de 55 à 80% et B en proportion de 5 à 45%, la somme des taux molaires de A + B étant égale à 100%.

Avantageusement, la composition comprend ou est constituée des motifs A en proportion de 55 à 80% et B en proportion de 15 à 45%, la somme des taux molaires de A + B étant égale à 100%.

Avantageusement, la composition comprend ou est constituée des motifs A en proportion de 55 à 80% et B en proportion de 20 à 45%, la somme des taux molaires de A + B étant égale à 100%.

Avantageusement, la composition comprend ou est constituée des motifs A en proportion de 55 à 80% et B en proportion de 25 à 45%, la somme des taux molaires de A + B étant égale à 100%.

Avantageusement, la composition comprend ou est constituée des motifs A en proportion de 55 à 80% et B en proportion de 30 à 45%, la somme des taux molaires de A + B étant égale à 100%.

Avantageusement, la composition comprend ou est constituée des motifs A en proportion de 55 à 75% et B en proportion de 5 à 45%, la somme des taux molaires de A + B étant égale à 100%.

Avantageusement, la composition comprend ou est constituée des motifs A en proportion de 55 à 75% et B en proportion de 15 à 45%, la somme des taux molaires de A + B étant égale à 100%.

Avantageusement, la composition comprend ou est constituée des motifs A en proportion de 55 à 75% et B en proportion de 20 à 45%, la somme des taux molaires de A + B étant égale à 100%.

Avantageusement, la composition comprend ou est constituée des motifs A en proportion de 55 à 75% et B en proportion de 25 à 45%, la somme des taux molaires de A + B étant égale à 100%.

Avantageusement, la composition comprend ou est constituée des motifs A en proportion de 55 à 75% et B en proportion de 30 à 45%, la somme des taux molaires de A + B étant égale à 100%.

Avantageusement, la composition comprend ou est constituée des motifs A en proportion de 55 à 70% et B en proportion de 5 à 45%, la somme des taux molaires de A + B étant égale à 100%.

Avantageusement, la composition comprend ou est constituée des motifs A en proportion de 55 à 70% et B en proportion de 15 à 45%, la somme des taux molaires de A + B étant égale à 100%.

Avantageusement, la composition comprend ou est constituée des motifs A en proportion de 55 à 70% et B en proportion de 20 à 45%, la somme des taux molaires de A + B étant égale à 100%.

Avantageusement, la composition comprend ou est constituée des motifs A en proportion de 55 à 70% et B en proportion de 25 à 45%, la somme des taux molaires de A + B étant égale à 100%.

Avantageusement, la composition comprend ou est constituée des motifs A en proportion de 55 à 70% et B en proportion de 30 à 45%, la somme des taux molaires de A + B étant égale à 100%.

Avantageusement, la composition comprend ou est constituée des motifs A en proportion de 55 à 95% et B en proportion de 5 à 45%, la somme des taux molaires de A + B étant égale à 100%.

Avantageusement, la composition comprend ou est constituée des motifs A en proportion de 55 à 95% et B en proportion de 15 à 45%, la somme des taux molaires de A + B étant égale à 100%.

Avantageusement, la composition comprend ou est constituée des motifs A en proportion de 55 à 95% et B en proportion de 20 à 45%, la somme des taux molaires de A + B étant égale à 100%.

Avantageusement, la composition comprend ou est constituée des motifs A en proportion de 55 à 95% et B en proportion de 25 à 45%, la somme des taux molaires de A + B étant égale à 100%.

Avantageusement, la composition comprend ou est constituée des motifs A en proportion de 55 à 95% et B en proportion de 30 à 45%, la somme des taux molaires de A + B étant égale à 100%.

Avantageusement, la composition comprend ou est constituée des motifs A en proportion de 55 à 85% et B en proportion de 5 à 45%, la somme des taux molaires de A + B étant égale à 100%.

Avantageusement, la composition comprend ou est constituée des motifs A en proportion de 55 à 85% et B en proportion de 15 à 45%, la somme des taux molaires de A + B étant égale à 100%.

Avantageusement, la composition comprend ou est constituée des motifs A en proportion de 55 à 85% et B en proportion de 20 à 45%, la somme des taux molaires de A + B étant égale à 100%.

Avantageusement, la composition comprend ou est constituée des motifs A en proportion de 55 à 85% et B en proportion de 25 à 45%, la somme des taux molaires de A + B étant égale à 100%.

Avantageusement, la composition comprend ou est constituée des motifs A en proportion de 55 à 85% et B en proportion de 30 à 45%, la somme des taux molaires de A + B étant égale à 100%.

Avantageusement, la composition comprend ou est constituée des motifs A en proportion de 55 à 80% et B en proportion de 5 à 45%, la somme des taux molaires de A + B étant égale à 100%.

Avantageusement, la composition comprend ou est constituée des motifs A en proportion de 55 à 80% et B en proportion de 15 à 45%, la somme des taux molaires de A + B étant égale à 100%.

Avantageusement, la composition comprend ou est constituée des motifs A en proportion de 55 à 80% et B en proportion de 20 à 45%, la somme des taux molaires de A + B étant égale à 100%.

Avantageusement, la composition comprend ou est constituée des motifs A en proportion de 55 à 80% et B en proportion de 25 à 45%, la somme des taux molaires de A + B étant égale à 100%.

Avantageusement, la composition comprend ou est constituée des motifs A en proportion de 55 à 80% et B en proportion de 30 à 45%, la somme des taux molaires de A + B étant égale à 100%.

Avantageusement, la composition comprend ou est constituée des motifs A en proportion de 55 à 75% et B en proportion de 5 à 45%, la somme des taux molaires de A + B étant égale à 100%.

Avantageusement, la composition comprend ou est constituée des motifs A en proportion de 55 à 75% et B en proportion de 15 à 45%, la somme des taux molaires de A + B étant égale à 100%.

Avantageusement, la composition comprend ou est constituée des motifs A en proportion de 55 à 75% et B en proportion de 20 à 45%, la somme des taux molaires de A + B étant égale à 100%.

Avantageusement, la composition comprend ou est constituée des motifs A en proportion de 55 à 75% et B en proportion de 25 à 45%, la somme des taux molaires de A + B étant égale à 100%.

Avantageusement, la composition comprend ou est constituée des motifs A en proportion de 55 à 75% et B en proportion de 30 à 45%, la somme des taux molaires de A + B étant égale à 100%.

Avantageusement, la composition comprend ou est constituée des motifs A en proportion de 55 à 70% et B en proportion de 5 à 45%, la somme des taux molaires de A + B étant égale à 100%.

Avantageusement, la composition comprend ou est constituée des motifs A en proportion de 55 à 70% et B en proportion de 15 à 45%, la somme des taux molaires de A + B étant égale à 100%.

Avantageusement, la composition comprend ou est constituée des motifs A en proportion de 55 à 70% et B en proportion de 20 à 45%, la somme des taux molaires de A + B étant égale à 100%.

Avantageusement, la composition comprend ou est constituée des motifs A en proportion de 55 à 70% et B en proportion de 25 à 45%, la somme des taux molaires de A + B étant égale à 100%.

Avantageusement, la composition comprend ou est constituée des motifs A en proportion de 55 à 70% et B en proportion de 30 à 45%, la somme des taux molaires de A + B étant égale à 100%.

Avantageusement, les compositions comprenant ou constituées des motifs A et B, la somme des taux molaires de A + B étant égale à 100% ci-dessus définies comprennent également un motif C à un taux molaire allant jusqu'à 30%, par rapport à l'ensemble des motifs dudit polymère.

Avantageusement, les compositions comprenant ou constituées des motifs A et B, la somme des taux molaires de A + B étant égale à 100% ci-dessus définies comprennent également un motif C à un taux molaire allant jusqu'à 25%, par rapport à l'ensemble des motifs dudit polymère.

Avantageusement, les compositions comprenant ou constituées des motifs A et B, la somme des taux molaires de A + B étant égale à 100% ci-dessus définies comprennent également un motif C à un taux molaire allant jusqu'à 20%, par rapport à l'ensemble des motifs dudit polymère.

Avantageusement, les compositions comprenant ou constituées des motifs A et B, la somme des taux molaires de A + B étant égale à 100% ci-dessus définies comprennent également un motif C à un taux molaire allant jusqu'à 15%, par rapport à l'ensemble des motifs dudit polymère.

Selon une première option préférée de la composition selon l'invention décrite ci-haut, ladite composition a un motif B avec x' défini selon l'option B1 décrite ci-haut, en particulier avec comme diamine plus préférée pour ledit motif B, étant la MPMD. Le motif A reste comme défini ci-haut, c'est-à-dire x.T, avec x une diamine aliphatique linéaire en C₄ à C₁₈, de préférence C₉, C₁₀, C₁₁ ou C₁₂.

Selon une deuxième option préférée de ladite composition, celle-ci a un motif B où x' est la MXD selon option B2 définie ci-haut. Le motif A reste comme défini pour la première option citée. Cette seconde option constitue ensemble avec la première citée ci-dessus les plus préférées de l'invention et en particulier cette seconde option est la plus préférée de l'invention.

Une troisième option préférée est celle où B est défini selon l'option B1 ou B2 ou B3 comme définie ci-haut et avec présence d'un motif C comme défini ci-haut en remplacement de B et jusqu'à 25%, de préférence jusqu'à 20%, plus préférentiellement jusqu'à 15% en moles et en particulier avec B étant défini selon l'option première ou seconde comme définie ci-haut.

Avantageusement, les compositions comprenant ou constituées des motifs A et B, la somme des taux molaires de A + B étant égale à 100% ci-dessus définies comprennent également un motif C en remplacement partiel de B et à un taux molaire allant jusqu'à 25%, par rapport audit motif B.

Avantageusement, les compositions comprenant ou constituées des motifs A et B, la somme des taux molaires de A + B étant égale à 100% ci-dessus définies comprennent également un motif C en remplacement partiel de B et à un taux molaire allant jusqu'à 20%, par rapport audit motif B.

Avantageusement, les compositions comprenant ou constituées des motifs A et B, la somme des taux molaires de A + B étant égale à 100% ci-dessus définies comprennent également un motif C en remplacement partiel de B et à un taux molaire allant jusqu'à 15% par rapport audit motif B.

Plus préférentiellement encore, ladite composition de polyamide est basée sur les motifs A et B sélectionnés comme suit :
- pour le motif A étant 6T, ledit motif B est sélectionné parmi : 9T, 10T, 11T, 12T, 13T, 14T, 15T, 16T, 17T et 18T, MPMD.T et MXD.T, de préférence 11T, 12T, 13T, 14T, 15T, 16T, 17T et 18T, MPMD.T et MXD.T, plus préférentiellement MPMD.T ou MXD.T, avec un taux molaire de B allant de 20 à 45%,
- pour le motif A étant 9T, ledit motif B est sélectionné parmi : 6T, 10T, 11T, 12T, 13T, 14T, 15T, 16T, 17T et 18T, MPMD.T et MXD.T, de préférence 11T, 12T, 13T, 14T, 15T, 16T, 17T et 18T, MPMD.T et MXD.T , plus préférentiellement MPMD.T ou MXD.T, avec un taux molaire de B allant de 30 à 45%,
- pour le motif A étant 10T, ledit motif B est sélectionné parmi : 6T, 9T, 11T, 12T, 13T, 14T, 15T, 16T, 17T et 18T, MPMD.T et MXD.T, de préférence 12T, 13T, 14T, 15T, 16T, 17T et 18T, MPMD.T et MXD.T, plus préférentiellement MPMD.T ou MXD.T, avec un taux molaire de B allant de 25 à 45%,
- pour le motif A étant 11T, ledit motif B est sélectionné parmi : 6T, 9T, 10T, 12T, 13T, 14T, 15T, 16T, 17T et 18T, MPMD.T et MXD.T, de préférence 9T, 13T, 15T, 16T, 17T et 18T, MPMD.T et MXD.T, plus préférentiellement MPMD.T ou MXD.T, avec un taux molaire de B allant de 20 à 45%,
- pour le motif A étant 12T, ledit motif B est sélectionné parmi : 6T, 9T, 10T, 11T, 13T, 14T, 15T, 16T, 17T et 18T, MPMD.T et MXD.T, de préférence 9T, 10T, 14T, 15T, 16T, 17T et 18T, MPMD.T et MXD.T, plus préférentiellement MPMD.T ou MXD.T, avec un taux molaire de B allant de 20 à 45%.

Selon cette sélection, une première composition plus particulière de l'invention peut être définie avec le motif A étant un motif 6T et le motif B étant sélectionné parmi : 9T, 10T, 11T, 12T, 13T, 14T, 15T, 16T, 17T et 18T, MPMD.T et MXD.T, de préférence 11T, 12T, 13T, 14T, 15T, 16T, 17T et 18T, MPMD.T et MXD.T, plus préférentiellement MPMD.T ou MXD.T, avec un taux molaire de B allant de 20 à 45%.

Une deuxième composition particulière correspond à un motif A étant un motif 9T et le motif B étant sélectionné parmi: 10T, 11T, 12T, 13T, 14T, 15T, 16T, 17T et 18T, MPMD.T et MXD.T, de préférence 11T, 12T, 13T, 14T, 15T, 16T, 17T et 18T, MPMD.T et MXD.T, plus préférentiellement MPMD.T ou MXD.T, avec un taux molaire de B allant de 30 à 45%. Une troisième composition particulière correspond à un motif A étant un motif 10T et le motif B étant sélectionné parmi : 9T, 11T, 12T, 13T, 14T, 15T, 16T, 17T et 18T, MPMD.T et MXD.T, de préférence 12T, 13T, 14T, 15T, 16T, 17T et 18T, MPMD.T et MXD.T, plus préférentiellement MPMD.T ou MXD.T, avec un taux molaire de B allant de 25 à 45%. Une quatrième composition particulière correspond à un motif A étant un motif 11T et le motif B étant sélectionné parmi : 9T, 10T, 12T, 13T, 14T, 15T, 16T, 17T et 18T, MPMD.T et MXD.T, de préférence, 9T, 13T, 15T, 16T, 17T et 18T, MPMD.T et MXD.T, plus préférentiellement MPMD.T ou MXD.T, avec un taux molaire de B allant de 20 à 45%. Finalement, une autre composition particulière correspond à un motif A étant un motif 12T et le motif B étant sélectionné parmi : 9T, 10T, 11T, 13T, 14T, 15T, 16T, 17T et 18T, MPMD.T et MXD.T, de préférence 9T, 10T, 14T, 15T, 16T, 17T et 18T, MPMD.T et MXD.T, plus préférentiellement MPMD.T ou MXD.T, avec un taux molaire de B allant de 20 à 45%.

Selon un cinquième option préférée, le motif A reste comme défini ci-haut, c'est-à-dire x.T, avec x une diamine aliphatique linéaire en C₄ à C₁₈, de préférence C₆, C₉, C₁₀, C₁₁ ou C₁₂, le motif B correspond à x'.T avec x' étant B3) une diamine aliphatique linéaire en C₄ à C₁₈ et le motif C est présent et en particulier choisi parmi : les aminoacides ou lactames en C₆ à C₁₂, de préférence en C₆, C₁₁ et C₁₂ ou leurs mélanges ou les motifs issus de la réaction d'un diacide aliphatique linéaire en C₆ à C₁₈, de préférence C₆ à C₁₂ et d'une diamine aliphatique linéaire en C₆ à C₁₈, de préférence C₆ à C₁₂ et de préférence avec les motifs A et B étant respectivement à base des diamines x et x' comme définies ci-haut.

De préférence, le motif C, dans cette cinquième option, est à un taux molaire inférieur à 40%, notamment inférieur à 30%, en particulier inférieur à 20%, par rapport au taux molaire total du polyamide comme défini selon l'invention.

Avantageusement, l'un des composés préféré de cette quatrième option est le 10.T/6.T/11.

Ladite composition comprend ou est constituée d'un polymère polyamide issu de la polymérisation du produit de réaction de :
a1) au moins un prépolymère dudit polymère polyamide comme déjà défini ci-haut avec ce prépolymère porteur de n fonctions réactives terminales X₁, identiques choisies parmi : -NH₂ (amine), -CO₂H (carboxy) et -OH (hydroxyle), de préférence -NH₂ (amine) et -CO₂H (carboxy), avec n étant 1 à 3, de préférence de 1 à 2, plus préférentiellement 1 ou 2, plus particulièrement 2, avec
a2) au moins un allongeur de chaîne Y₁-A'-Y₁, avec A' étant un biradical hydrocarboné de structure non polymérique (ni polymère ni oligomère ni prépolymère), porteur de 2 fonctions réactives terminales Y₁ identiques, réactives par polyaddition (sans élimination de sous-produit de réaction), avec au moins une fonction X₁ dudit prépolymère a1), de préférence de masse moléculaire inférieure à 500 et plus préférentiellement inférieure à 400,
en particulier Y₁ est choisi parmi: oxazine, oxazoline, oxazolinone, oxazinone, imidazoline, époxy, isocyanate, maléimide, anhydride cyclique, notamment oxazine, oxazoline, oxazolinone, oxazinone, imidazoline, époxy, maléimide, anhydride cyclique et préférentiellement X₁ est CO₂H et Y₁ est choisi parmi un epoxy et une oxazoline.

NH₂ (amine) signifie amine primaire et secondaire.

Comme exemples convenables d'allongeurs a2) en fonction des fonctions X₁ portées par ledit prépolymère polyamide semi-cristallin a1), on peut citer les suivants :
- lorsque X₁ est NH₂ ou OH de préférence NH₂ :
   ∘ soit l'allongeur de chaîne Y₁-A'-Y₁ correspond à
      ▪ Y₁ choisi parmi les groupements : maléimide, isocyanate éventuellement bloqué, oxazinone et oxazolinone, anhydride cyclique, de préférence oxazinone et oxazolinone, en particulier maléimide, oxazinone et oxazolinone, anhydride cyclique, de préférence oxazinone et oxazolinone
         et
      ▪ A' est un espaceur carboné ou radical carboné portant les fonctions ou groupements réactifs Y₁, choisi parmi :
         - une liaison covalente entre deux fonctions (groupements) Y dans le cas où Y₁ = oxazinone et oxazolinone ou
         - une chaîne hydrocarbonée aliphatique ou une chaîne hydrocarbonée aromatique et/ou cycloaliphatique, ces deux dernières comprenant au moins un cycle de 5 ou 6 atomes de carbone éventuellement substitué, avec éventuellement ladite chaîne hydrocarbonée aliphatique ayant éventuellement un poids moléculaire de 14 à 200 g.mol⁻¹
   ∘ soit l'allongeur de chaîne Y₁-A'-Y₁ correspond à Y étant un groupement caprolactame et à A' pouvant être un radical carbonyle tel que le carbonyl biscaprolactame ou à A' pouvant être un téréphtaloyle ou un isophtaloyle,
   ∘ soit ledit allongeur de chaîne Y₁-A'-Y₁ porte un groupement Y d'anhydride cyclique et de préférence cet allongeur est choisi parmi un dianhydride carboxylique cycloaliphatique et/ou aromatique et plus préférentiellement il est choisi parmi : le dianhydride éthylènetétracarboxylique, le dianhydride pyromellitique, le dianhydride 3,3',4,4'-biphényltétracarboxylique, le dianhydride 1,4,5,8-naphtalènetétracarboxylique, le dianhydride perylènetétracarboxylique, le dianhydride 3,3',4,4'-benzophénone tétracarboxylique, le dianhydride 1,2,3,4-cyclobutanetétracarboxylique, le dianhydride hexafluoroisopropylidène bisphtalique, le dianhydride 9,9-bis(trifluorométhyl)xanthènetétracarboxylique, le dianhydride 3,3',4,4'-diphénylsulfonetétracarboxylique, le dianhydride bicyclo[2.2.2]oct-7-ène-2,3,5,6-tétracarboxylique, le dianhydride 1,2,3,4-cyclopentanetétracarboxylique, le dianhydride 3,3',4,4'-diphényl éther tétracarboxylique ou leurs mélanges
   et
- lorsque X₁ est COOH :
   ∘ ledit allongeur de chaîne Y₁-A'-Y₁ correspond à :
      ▪ Y₁ choisi parmi les groupements : oxazoline, oxazine, imidazoline, aziridine, comme le 1, 1'-iso- ou téré- phtaloyl-bis (2-methyl aziridine) ou epoxy,
      ▪ A' étant un espaceur (radical) carboné tel que défini ci-dessus.

Plus particulièrement, quand dans ledit allongeur Y₁-A'-Y₁, ladite fonction Y₁ est choisie parmi oxazinone, oxazolinone, oxazine, oxazoline ou imidazoline, en particulier oxazoline, dans ce cas, dans l'allongeur de chaîne représenté par Y₁-A'-Y₁, A' peut représenter un alkylène tel que -(CH₂)ₘ-avec m allant de 1 à 14 et de préférence de 2 à 10 ou A' peut représenter un cycloalkylène et/ou un arylène substitué (alkyle) ou non substitué, comme les arylènes benzéniques, tels que les phénylènes o-, m-, -p ou les arylènes naphtaléniques et de préférence A' est un arylène et/ou un cycloalkylène.

Dans le cas où Y₁ est un époxy, l'allongeur de chaîne peut être choisi parmi les bisphenol A diglycidyl éther (DGEBA), et son dérivé hydrogéné (cycloaliphatique) bisphenol F diglycidyl éther, le tétrabromo bisphénol A diglycidyl éther, ou les hydroquinone diglycidyl éther, éthylène glycol diglycidyl éther, propylène glycol diglycidyl éther, butylène glycol diglycidyl éther, néopentyl glycol diglycidyl éther, 1,4-butanediol diglycidyl éther, 1,6-hexanediol diglycidyl éther, cyclohexanediméthanol diglycidyl éther, polyéthylène glycol diglycidyl éther de Mn <500, polypropylène glycol diglycidyl éther de Mn <500, polytétraméthylène glycol diglycidyl éther de Mn <500, résorcinol diglycidyl éther, néopentylglycol diglycidyl éther, bisphenol A polyéthylène glycol diglycidyl éther de Mn <500, bisphénol A polypropylèneglycol diglycidyl éther de Mn <500, diglycidyl esters de diacide carboxylique tel que le glycidyl ester d'acide téréphtalique ou les dioléfines (diènes) époxydées ou acides gras à double insaturation éthylénique époxydée, le diglycidyl 1,2-Cyclohexanedicarboxylate, et leurs mélanges.

Dans le cas du carbonyl- ou térephtaloyl- ou isophtaloyl- biscaprolactame comme allongeur de chaîne Y₁-A'-Y₁, les conditions préférées évitent l'élimination de sous-produit, comme le caprolactame lors de ladite polymérisation et mise en oeuvre à l'état fondu.

Dans le cas éventuel cité ci-haut où Y₁ représente une fonction isocyanate bloqué, ce blocage peut être obtenu par des agents bloquants de la fonction isocyanate, comme la epsilon-caprolactame, la méthyl éthyl kétoxime, la diméthyl pyrazole, le di éthyl malonate.

De même, dans le cas où l'allongeur est un dianhydride réagissant avec un prépolymère P(X₁)n où X₁ = NH₂, les conditions préférées évitent toute formation de cycle imide lors de la polymérisation et lors la mise en oeuvre à l'état fondu.

Pour X₁ = OH ou NH₂, le groupement Y₁ est choisi de préférence parmi : isocyanate (non bloqué), oxazinone et oxazolinone, plus préférentiellement oxazinone et oxazolinone, avec comme espaceur (radical) A' étant comme défini ci-haut.

Comme exemples d'allongeurs de chaîne portant des fonctions réactives Y oxazoline ou oxazine convenables à la mise en oeuvre de l'invention, on pourra se référer à ceux décrits sous références « A », « B », « C » et « D » à la page 7 de la demande EP 0 581 642, ainsi qu'à leurs procédés de préparation et leurs modes de réaction qui y sont exposés. « A » dans ce document est la bisoxazoline, « B » la bisoxazine, « C » la 1,3 phénylène bisoxazoline et « D » la 1,4-phénylène bisoxazoline.

A titre d'exemple, dans le cas ou X₁ = CO₂H et l'allongeur de chaîne Y₁-A'-Y₁ est la 1,4-phénylène bisoxazoline, le produit de réaction obtenu possède au moins un motif récurrent de structure suivante :

-O-C(O)-P-C(O)-O-R₁-NH-C(O)-A'-C(O)-NH-R₁-

dans laquelle :
P est un polyamide à terminaisons acides HO-C(O)-P-C(O)-OH obtenu à partir des motifs amides (A), (B) ou (C),
R₁ (CH₂)₂, et
A' est un phényle.

Comme exemples d'allongeurs de chaîne à fonction réactive Y₁ imidazoline convenables à la mise en oeuvre de l'invention, on pourra se référer à ceux décrits (« A » à « F ») à la page 7 à 8 et tableau 1 de la page 10 dans la demande EP 0 739 924 ainsi qu'à leurs procédés de préparation et leurs modes de réaction qui y sont exposés.

Comme exemples d'allongeurs de chaîne à fonction réactive Y₁ = oxazinone ou oxazolinone qui conviennent à la mise en oeuvre de l'invention, on peut se référer à ceux décrits sous références « A » à « D » à la page 7 à 8 de la demande EP 0 581 641, ainsi qu'à leurs procédés de préparation et leurs modes de réaction qui y sont exposés.

Comme exemples de groupements Y₁ oxazinones (cycle à 6 atomes) et oxazolinones (cycle à 5 atomes) convenables, on peut citer les groupements Y₁ dérivés de : benzoxazinone d'oxazinone ou d'oxazolinone, avec comme espaceur A' pouvant être une simple liaison covalente avec pour allongeurs correspondants respectifs étant : bis- (benzoxazinone), bisoxazinone et bisoxazolinone.

A' peut être également un alkylène en C₁ à C₁₄, de préférence en C₂ à C₁₀ mais de préférence A' est un arylène et plus particulièrement il peut être un phénylène (substitué par Y₁ en positions 1,2 ou 1,3 ou 1,4) ou un radical naphtalène (disubstitué par Y₁) ou un phtaloyle (iso- ou téréphtaloyle) ou A' peut être un cycloalkylène.

Pour les fonctions Y₁ comme oxazine (cycle à 6), oxazoline (cycle à 5) et imidazoline (cycle à 5), le radical A' peut être comme décrit ci-haut avec A' pouvant être une simple liaison covalente et avec les allongeurs correspondants respectifs étant : bisoxazine, bisoxazoline et bisimidazoline. A' peut être également un alkylène en C₁ à C₁₄, de préférence en C₂ à C₁₀. Le radical A' est de préférence un arylène et, plus particulièrement, il peut être un phénylène (substitué par Y₁ en positions 1,2 ou 1,3 ou 1,4) ou un radical naphtalène (disubstitué par Y₁) ou un phtaloyle (iso- ou téréphtaloyle) ou A' peut être un cycloalkylène.

Dans le cas où Y₁ = aziridine (hétérocycle azoté à 3 atomes équivalent à l'oxyde d'éthylène en remplaçant l'éther -O- par -NH-), le radical A' peut être un phtaloyle (1,1'iso- ou téré- phtaloyle) avec comme exemple d'allongeur de ce type, la 1, 1' isophtaloyl-bis(2-méthyl aziridine).

La présence d'un catalyseur de la réaction entre ledit prépolymère P(X)n et ledit allongeur Y₁-A'-Y₁ à un taux allant de 0,001 à 2%, de préférence de 0,01 à 0,5% par rapport au poids total de deux co-réactants cités peut accélérer la réaction de (poly)addition et ainsi raccourcir le cycle de production. Un tel catalyseur peut être choisi parmi : 4,4' diméthyl aminopyridine, l'acide p-toluène sulfonique, acide phosphorique, NaOH et éventuellement ceux décrits pour une polycondensation ou transestérification comme décrits dans EP 0 425 341, page 9, lignes 1 à 7.

Selon un cas plus particulier du choix dudit allongeur, A' peut représenter un alkylène, tel que -(CH₂)ₘ- avec m allant de 1 à 14 et de préférence de 2 à 10 ou représente un arylène substitué alkyle ou non substitué, comme les arylènes benzéniques (comme les phénylènes o-, m-, -p) ou naphtaléniques (avec arylènes : naphtalenylènes). De préférence, A' représente un arylène qui peut être benzénique ou naphténique substitué ou non.

Comme déjà précisé, ledit allongeur de chaîne (a2) a une structure non polymérique et de préférence une masse moléculaire inférieure à 500, plus préférentiellement inférieure à 400.

Lesdits prépolymères réactifs de ladite composition, cités plus haut, ont une masse moléculaire moyenne en nombre Mn allant de 500 à 10000, de préférence de 1000 à 6000 déterminée en particulier par le calcul à partir du taux des fonctions terminales déterminé par titration potentiométrique en solution et la fonctionnalité desdits prépolymères. Les masses Mn peuvent également déterminées par chromatographie d'exclusion stérique ou par RMN.

Le taux dedit allongeur dans le dit polymère polyamide varie de 1 à 20%, en particulier de 5 à 20%, notamment de 10 à 20%.

Dans le cas des compositions réactives de l'invention selon définition a), lesdits prépolymères réactifs sont préparés par réaction classique de polycondensation entre les composants diamines et diacides correspondants et éventuellement aminoacides ou lactames en respectant la nature et proportions des motifs A et B et éventuellement C selon l'invention. Les prépolymères portant des fonctions X₁' et Y₁' amine et carboxy sur la même chaîne peuvent être obtenus par exemple en ajoutant une combinaison de monomères (aminoacide, diamine, diacide) présentant au total une quantité égale de motifs amine et carboxy. Une autre voie d'obtention de ces prépolymères porteurs d'une fonction X₁' et une Y₁' est, par exemple, en associant un prépolymère portant 2 fonctions identiques X₁' = amine, avec un prépolymère diacide porteur de Y₁' : carboxy, avec un taux molaire global en fonctions acides égal à celui des fonctions amines X₁' de départ.

Pour l'obtention de prépolymères fonctionnalisés avec des fonctions identiques (amines ou carboxy) sur la même chaîne, il suffit d'avoir un excès de diamine (ou de fonctions amines globalement) pour avoir des fonctions terminales amines ou excès de diacide (ou de fonctions carboxy globalement) pour avoir des fonctions terminales carboxy.

Dans le cas d'un prépolymère P(X₁)n avec n fonctions X₁ identiques, la fonctionnalité 1 peut être obtenue en présence d'un composant monofonctionnel bloquant (monoacide ou monoamine en fonction de la nature de X₁ = amine ou carboxy).

Une fonctionnalité n = 2 peut être obtenue à partir de composants difonctionnels : diamines et diacides avec excès de l'un pour fixer X₁ en fonction de cet excès.

Pour n = 3 par exemple, pour un prépolymère P(X₁)n, il faut la présence d'un composant trifonctionnel, par exemple présence d'une triamine (une mole par chaîne de prépolymère) avec une diamine dans la réaction avec un diacide. La fonctionnalité préférée pour P(X₁)n est n = 2.

Ledit polymère polyamide est issu d'un prépolymère polyamide réactif comprenant un allongeur de chaîne par polymérisation de la composition précurseur réactive, ce prépolymère réactif a une Mn d'au moins deux fois inférieure à celle dudit polymère polyamide. La masse moléculaire moyenne en nombre Mn dudit polymère polyamide de de ladite composition est de préférence dans une plage allant de 10000 à 40000, de préférence de 12000 à 30000, déterminée en particulier par le calcul à partir du taux des fonctions terminales déterminé par titration potentiométrique en solution et la fonctionnalité desdits prépolymères.

Selon un mode réalisation avantageux, ladite composition présente également une masse moléculaire moyenne modulable en fonction de la température à laquelle est soumise.

Selon un mode de réalisation avantageux, la composition de l'invention ci-dessus définie comprend ou est constituée d'un polymère polyamide issu d'un prépolymère additionné d'un allongeur de chaîne Y₁-A'-Y₁ est choisi parmi les phénylènes bis oxazolines, de préférence la 1,3 - phénylène-bis(2-oxazoline) ou la 1,4-phénylène-bis(2-oxazoline) (PBO).

Le terme « modulable » signifie dans ce cas que la masse moléculaire moyenne du polymère polyamide de la composition est variable en fonction de la température à laquelle ladite composition est soumise.

En d'autres termes, un polymère polyamide avec un allongeur de chaîne de type PBO (PA-PBO-PA) présentant une masse moléculaire moyenne Mn₁, lorsqu'il est préparé à une température T₁ supérieure ou égale à T_{f} ou T_{g}, présente une masse moléculaire moyenne Mn₂, avec Mn₂ ≤ Mn₁, si ce même PA-PBO-PA est soumis cette fois à une température T₂, T₂ étant supérieure ou égale à Tf, et T₂ ≥ T₁ et inversement, Mn₂ ≥ Mn1, si T₂≤T₁.

Par conséquent, les Inventeurs ont trouvé que non seulement la viscosité à l'état fondu de la composition était modulable mais également la masse moléculaire moyenne dudit polymère polyamide procurant ainsi l'avantage de pouvoir obtenir des compositions avec une viscosité et/ou une masse moléculaire moyenne du polymère polyamide de ladite composition qui soient modulable permettant ainsi des utilisations variées pour l'extrusion, l'injection ou le moulage et des applications variées de ladite composition.

La composition selon l'invention peut comprendre, des charges autres que des fibres de renfort et des additifs.

Parmi les charges convenables, on peut citer par exemple : les charges minérales ou organiques : le noir de carbone, nanotubes de carbone (NTC), nanofibrilles de carbone, billes de verre, polymères recyclés broyés à l'état de poudre.

Parmi les additifs convenables, on peut citer : des additifs absorbant dans l'UV ou IR de façon à permettre le soudage du composite obtenu, par une technologie laser (UV ou IR) et des stabilisants thermiques choisis parmi les antioxydants de type phénols stériquement encombrés ou amines stériquement encombrées (HALS). La fonction de ces stabilisants est de prévenir l'oxydation thermique et la photoxydation et dégradation conséquente du polyamide.

Le deuxième objet de l'invention concerne le polymère polyamide réactif issu d'un prépolymère additionné d'un allongeur de chaîne tel que défini selon la composition ci-dessus. Ce polymère polyamide est par définition un des composants essentiels de la composition du matériau composite thermoplastique de la présente invention et fait donc partie de l'invention comme produit lié à la présente invention avec le même concept inventif commun face au même problème technique à résoudre.

Le polymère polyamide peut être sous forme de granulés ou de poudre.

Le troisième objet de l'invention concerne l'utilisation d'au moins un polymère polyamide tel que défini selon la composition ci-dessus, pour moduler la viscosité à l'état fondu d'une composition comprenant ledit polymère polyamide.

L'utilisation dudit prépolymère à des températures variables permet d'obtenir des compositions présentant des viscosités différentes.

Avantageusement, l'utilisation dudit prépolymère polyamide permet de moduler la viscosité à l'état fondu d'une composition comprenant ledit polymère polyamide et la masse moléculaire moyenne dudit polymère polyamide.

Avantageusement, ledit prépolymère polyamide comprend un allongeur de chaîne Y₁-A'-Y₁ qui est la 1,3 - phénylène-bis(2-oxazoline) ou la 1,4 - phénylène-bis(2-oxazoline).

Le troisième objet concerne également l'utilisation d'une composition telle que définie ci-dessus, pour l'extrusion, l'injection ou le moulage pour la fabrication de pièces mécaniques ou de structure à base dudit matériau composite, et notamment pour l'imprégnation plus aisée de fibres de renfort pour la fabrication de composite.

Avantageusement, lesdites pièces mécaniques ou de structure dudit matériau composite concernent des applications dans le domaine de l'automobile, de l'électrique ou l'électronique, ferroviaire, marin (maritime), de l'éolien, photovoltaïque, solaire, y compris panneaux solaires et composants de centrales solaires, du sport, aéronautique et spatial, transport routier (concernant les camions), du bâtiment, génie civil, des panneaux et des loisirs.

Avantageusement, lesdites pièces pour des applications dans l'automobile sont des pièces sous capot moteur pour le transport de fluide, notamment dans des dispositifs d'admission d'air, de refroidissement (par exemple par air, liquide de refroidissement,...), de transport ou transfert de carburants ou de fluides (tels que huile, eau,...).

Avantageusement, lesdites pièces mécaniques ou de structure pour des applications dans l'électrique ou l'électronique sont biens d'équipements électriques et électroniques, tels que solénoïdes encapsulés, pompes, téléphones, ordinateurs, imprimantes, télécopieurs, modems, moniteurs, télécommandes, caméras, disjoncteurs, gaines de câbles électriques, fibres optiques, interrupteurs, systèmes multimédias. Ces éléments de biens d'équipements électriques et électroniques couvrent non seulement les parties structurelles de tels biens (boîtiers, coques...) mais également leurs éventuels accessoires associés (écouteurs, éléments de connectique, câbles...).

Plus particulièrement, on peut distinguer trois applications plus préférées en fonction de la température d'utilisation desdites pièces en matériau composite selon l'invention :
- dans l'éolien, avec une Tg dudit polyamide matrice thermoplastique d'au moins 90°C
- dans l'automobile, avec une Tg dudit polyamide d'au moins 100°C
- dans l'aéronautique, avec une Tg dudit polyamide d'au moins 120°C.

Cela signifie que pour une Tg d'au moins 100°C, il peut avoir deux applications possibles : automobile et éolien et si la Tg est d'au moins 120°C en plus de l'aéronautique comme application, on peut également avoir l'éolien et l'automobile.

L'utilisation de la composition de l'invention permet donc de préparer par extrusion diverses objets tels que tube, tuyau, profilé, fibre textile, plaque, feuille, film ou par injection ou moulage des objets pour les applications ci-dessus définies.

Le quatrième objet de l'invention concerne un procédé de fabrication d'un matériau composite thermoplastique, en particulier d'une pièce mécanique ou d'une pièce de structure à base dudit matériau, de composition telle que définie selon l'invention comme exposée ci-haut, lequel procédé comprend, au moins une étape de moulage ou de mise en oeuvre d'au moins une composition telle que définie ci-haut selon l'invention, à une température T permettant l'obtention d'une viscosité η désirée.

Plus particulièrement, ledit procédé peut comprendre les étapes suivantes :
i) imprégnation à l'état fondu d'un renfort fibreux par une composition telle que définie ci-haut selon l'invention mais ne comprenant pas ledit renfort fibreux dans un moule ouvert ou fermé ou hors moule, afin d'obtenir une composition telle que définie selon l'invention comprenant de plus, un renfort fibreux imprégné,
ii) mise en en oeuvre ou moulage de ladite composition de l'étape i), pour former la pièce composite finale dans un moule ou avec un autre système de mise en oeuvre.

Avantageusement, le polymère polyamide de la composition de l'invention a une température de transition vitreuse Tg inférieure ou égale à 75°C et de température de fusion de 150°C à moins de 250°C ou une Tg supérieure à 75°, en particulier d'au moins 80°C et de préférence de 100 à 200°C, plus préférentiellement de 110 à 200°C, en particulier de 110°C à moins de 180°C, ledit procédé comprenant :
i) une étape d'imprégnation à l'état fondu en masse, par au moins une composition telle que définie ci-haut, en particulier ayant une viscosité à la température d'imprégnation à l'état fondu en masse, ne dépassant pas 200 Pa.s, de préférence ne dépassant pas 150 Pa.s,
ii) une étape de refroidissement et d'obtention d'un préimprégné fibreux
iii) une étape de mise en oeuvre et mise en forme finale dudit matériau composite.

Dans ledit procédé selon l'invention, ladite mise en oeuvre peut être réalisée de préférence selon un procédé RTM, S-RIM, injection-compression, pultrusion ou par infusion, en particulier dans le cas d'une composition.

Avantageusement, ladite étape de mise en oeuvre est réalisée par thermocompression de préimprégnés sous pression réduite.

Les fibres de renfort ou renfort fibreux peuvent être un assemblage de fibres, de préférence de fibres longues, c'est-à-dire ayant un facteur de forme défini par le ratio de longueur sur diamètre de la fibre, ce qui signifie que ces fibres ont une section circulaire, supérieur à 1000, de préférence supérieur à 2000. Dans cet assemblage, les fibres peuvent être continues, sous forme de renfort unidirectionnel (UD) ou multidirectionnel (2D, 3D). En particulier, elles peuvent être sous forme de tissus, de nappes, de bandes ou de tresses et peuvent également être coupées par exemple sous forme de non tissés (mats) ou sous forme de feutres.

Ces fibres de renfort peuvent être choisies parmi :
- les fibres minérales, celles-ci ayant des températures de fusion Tf' élevées et supérieures à la température de fusion Tf dudit polyamide semi-cristallin de l'invention et supérieures à la température de polymérisation et/ou de mise en oeuvre.
- les fibres polymériques ou de polymère ayant une température de fusion Tf' ou à défaut de Tf', une température de transition vitreuse Tg', supérieure à la température de polymérisation ou supérieure à la température de fusion Tf dudit polyamide semi-cristallin constituant ladite matrice du composite et supérieure à la température de mise en oeuvre
- ou les mélanges des fibres citées ci-haut.

Comme fibres minérales convenables pour l'invention, on peut citer les fibres de carbone, ce qui inclut les fibres de nanotubes ou nanotubes de carbone (NTC), les nanofibres de carbone ou les graphènes ; les fibres de silice comme les fibres de verre, notamment de type E, R ou S2 ; les fibres de bore ; les fibres céramiques, notamment fibres de carbure de silicium, fibres de carbure de bore, fibres de carbonitrure de bore, fibres de nitrure de silicium, fibres de nitrure de bore, les fibres de basalte ; les fibres ou filaments à base de métaux et/ou de leurs alliages ; les fibres des oxydes métalliques, notamment d'alumine (Al₂O₃) ; les fibres métallisées comme les fibres de verre métallisées et les fibres de carbone métallisées ou les mélanges des fibres précitées.

Plus particulièrement, ces fibres peuvent être choisies comme suit :
- les fibres minérales peuvent être choisies parmi : les fibres de carbone, les fibres de nanotubes de carbone, fibres de verre, notamment de type E, R ou S2, fibres de bore, fibres céramiques, notamment fibres de carbure de silicium, fibres de carbure de bore, fibres de carbonitrure de bore, fibres de nitrure de silicium, fibres de nitrure de bore, fibres de basalte, fibres ou filaments à base de métaux et/ou leurs alliages, fibres à base d'oxydes métalliques comme Al₂O₃, les fibres métallisées comme les fibres de verre métallisées et les fibres de carbone métallisées ou les mélanges des fibres précitées, et
- les fibres de polymère ou polymériques, sous condition précitée ci-haut, sont choisies parmi :
   ▪ les fibres de polymères thermodurcissables et plus particulièrement choisies parmi : les polyesters insaturés, les résines époxy, les esters vinyliques, les résines phénoliques, les polyuréthanes, les cyanoacrylates et les polyimides, tels que les résines bis-maléimide, les aminoplastes résultant de la réaction d'une amine telle que la mélamine avec un aldéhyde tel que le glyoxal ou le formaldéhyde
   ▪ les fibres de polymères thermoplastiques et plus particulièrement choisies parmi : le polyéthylène téréphtalate (PET), le polybutylène téréphtalate (PBT), les polyoléfines haute densité telles que le polyéthylène (PET), le polypropylène (PP) et les copolymères PET/PP, PVOH (polyvinyl alcool)
   ▪ les fibres de polyamides répondant à l'une des formules : 6, 11, 12, 6.10, 6.12, 6.6, 4.6,
   ▪ les fibres d'aramides (comme le Kevlar^{®}) et polyamides aromatiques tels que ceux répondant à l'une des formules : PPD.T, MPD.I, PAA et PPA, avec PPD et MPD étant respectivement la p- et m-phénylène diamine, PAA étant les polyarylamides et PPA étant les polyphtalamides
   ▪ les fibres de copolymères blocs de polyamide tel que le polyamide/polyéther, les fibres de polyaryléthers cétones (PAEK) telles que la polyétheréther cétone (PEEK), la polyéthercétone cétone (PEKK), la polyéthercétoneéthercétone cétone (PEKEKK).

Les fibres de renfort préférées sont des fibres longues (à section circulaire) choisies parmi les : fibres de carbone, y compris métallisées, fibres de verre, y compris métallisées de type E, R, S2, fibres d'aramides (comme le Kevlar^{®}) ou de polyamides aromatiques, les fibres de polyaryléthers cétones (PAEK), telle que la polyétheréther cétone (PEEK), fibres de la polyéthercétone cétone (PEKK), fibres de la polyéthercétoneéthercétone cétone (PEKEKK) ou leurs mélanges.

Les fibres plus particulièrement préférées sont choisies parmi : fibres de verre, fibres de carbone, de céramique et fibres d'aramides (comme le Kevlar^{®}) ou leurs mélanges. Ces fibres ont une section circulaire.

Lesdites fibres peuvent représenter des taux de 40 à 70% en volume et de préférence de 50 à 65% en volume dudit matériau composite.

L'assemblage de fibres peut être aléatoire (mat), unidirectionnel (UD) ou multidirectionnel (2D, 3D ou autre). Son grammage, c'est-à-dire son poids par mètre carré, peut aller de 100 à 1000 g/m², de préférence de 200 à 700g/m². Les fibres peuvent être sous forme tissée ou non tissée, en particulier sous forme de tissus et d'étoffes de renfort. Elles peuvent en particulier être assemblées et liées sous forme de préforme ayant déjà la forme de la pièce finale. Comme liant convenable, on peut utiliser une composition selon a) ou b) et à défaut un liant compatible avec celle-ci (composition a) ou b)).

La présente invention couvre également un matériau composite thermoplastique résultant de l'utilisation d'au moins une composition pour matériau composite thermoplastique telle que définie ci-haut selon la présente invention.

En dernier, l'invention concerne une pièce mécanique ou une pièce de structure de matériau composite thermoplastique, laquelle résulte de l'utilisation d'au moins une composition de l'invention comme définie ci-haut ou de l'utilisation d'un polymère polyamide semi-cristallin tel que défini selon l'invention ou d'un matériau composite thermoplastique tel que défini ci-avant ou laquelle pièce est obtenue par un procédé tel que défini ci-haut selon l'invention.

Plus particulièrement, ladite pièce de structure est une pièce automobile post-traitée par cataphorèse, en particulier avec une Tg d'au moins 90°C.

Selon une autre option, elle est une pièce pour éolienne, en particulier avec une Tg d'au moins 100°C.

Selon une troisième option particulière, elle est une pièce pour l'aéronautique, en particulier avec une Tg d'au moins 120°C.

### Méthodes de détermination des caractéristiques citées

- La viscosité à l'état fondu du prépolymère ou de la composition précurseur est mesurée suivant le manuel de référence du constructeur de l'appareil de mesure utilisé, qui est un rhéomètre Physica MCR301, sous balayage d'azote à la température donnée sous cisaillement de 100 s⁻¹, entre deux plans parallèles de diamètre de 50 mm.
- La Mn du prépolymère ou du polymère thermoplastique est déterminée par potentiométrie, chromatographie d'exclusion stérique ou RMN.
- La mesure de la viscosité intrinsèque ou inhérente est réalisée dans le m-crésol. La méthode est bien connue de l'homme du métier. On suit la norme ISO 307:2007 mais en changeant le solvant (utilisation du m-crésol à la place de l'acide sulfurique ; la température (20°C), et la concentration (0.5 %massique).
- La température de transition vitreuse Tg des polymères thermoplastiques utilisés est mesurée à l'aide d'un calorimètre différentiel à balayage (DSC), après un deuxième passage en chauffe, suivant la norme ISO 11357-2 :2013.

La vitesse de chauffage et de refroidissement est de 20°C/min.
- La température de fusion Tf et la température de cristallisation Tc sont mesurées par DSC, après une première chauffe, selon la norme ISO 11357-3 :2013. La vitesse de chauffage et de refroidissement est de 20°C/min.
- L'enthalpie de cristallisation dudit polymère de matrice est mesurée en Calorimétrie Différentielle à Balayage (DSC) selon la norme ISO 11357-3 :2013.

### Description des figures

La figure 1 présente les différences des viscosités d'un PA₁ et un PA₁-All₁-PA₁ obtenues respectivement à T₂ et T₃ en partant d'un PA₁ et un PA₁-AII₁-PA₁ de même masse moléculaire moyenne Mn₁ possédant et présentant la même viscosité η₁ à la température T₁ supérieure ou égale à T_{f} ou T_{g}.

On observe que la viscosité de η'₂ de PA₁-All₁-PA₁ est inférieure à celle (η₂) de PA₁ pour une même température T₂, supérieure à T₁, et que la viscosité de η'₃ de PA₁-AII₁-PA₁ est inférieure à celle (η₃) de PA₁ pour une même température T₃ supérieure à T₁ et que le rapport η'₃/η₃< η'₂/η₂.

La figure 2 présente l'évolution de viscosité avec la température de l'exemple E selon l'invention et de l'exemple comparatif CE1. On observe que la viscosité du polymère selon l'invention est inférieure à celle du polymère comparatif pour T > T₁.

### Exemples

A - Préparation d'un polymère polyamide par allongement de chaîne d'un prépolymère ou oligomère) réactif
A-1 Préparation du prépolymère réactif P(X₁)n

Ce mode opératoire est représentatif de tous les types de polyamide de l'invention.

Dans un réacteur autoclave de 14 litres, on introduit 5 kg des matières premières suivantes :
- 500 g d'eau,
- les diamines
- les aminoacides ou lactames
- les diacides
- 35 g d'hypophosphite de sodium en solution,
- 0,1 g d'un antimousse WACKER AK1000 (société Wacker Silicones).

La nature et rapports molaires des motifs et structures moléculaires des polyamides prépolymères réactifs (par essai référencé) sont donnés au tableau 1 ci-dessous.

Le réacteur fermé est purgé de son oxygène résiduel puis chauffé à une température de 230°C de la matière. Après 30 minutes d'agitation dans ces conditions, la vapeur sous pression qui s'est formée dans le réacteur est détendue progressivement en 60 minutes, tout en augmentant progressivement la température matière de manière à ce qu'elle s'établisse à minimum Tf + 10°C à pression atmosphérique pour les polymères semi-cristallins de Tf>230°C, ou 250°C pour les autres polymères.

L'oligomère (prépolymère) est ensuite vidangé par la vanne de fond puis refroidi dans un bac d'eau puis broyé.

Les caractéristiques sont présentées au tableau 1 suivant.

**Tableau 1 : Caractéristiques des prépolymères préparés**

| Réf | Structure moléculaire et composition molaire | Monomères utilisés | X₁ | Tf (°C) | Tg (°C) | Tc (°C) | ΔH (J/g) | Indice d'acide meq/kg(*) | Mn potentiométrie g/mole |
|---|---|---|---|---|---|---|---|---|---|
| Prépo1 | 11 | - Acide amino-undecanoïque | COOH | 178.8 | 43.2 | 155 | 75 | 809 | 2472 |
| | | - Acide adipique (1 molécule par chaîne) | | | | | | | |
| Prépo2 | 11/6T/10T (9,1/27,3/63,6) | - Acide amino-undecanoïque | COOH | 267.8 | 99 | 234.5 | 60 | 740 | 2701 |
| | | - hexaméthylenediamine | | | | | | | |
| | | - decanediamine | | | | | | | |
| | | - acide térephtalique | | | | | | | |
| Prépo3 | 6I/10I (30/70) | - hexaméthylenediamine | COOH | (**) | 94.5 | (**) | (**) | 900 | 2222 |
| | | - decanediamine | | | | | | | |
| | | - acide isophtalique | | | | | | | |
| Prépo4 | MXDT/10T (41.2/58.8) | - m-xylylène diamine | COOH | 270.3 | 119.4 | 240.8 | 50.1 | 621 | 3221 |
| | | - decanediamine | | | | | | | |
| | | - acide térephtalique | | | | | | | |

| | | | | | | | | | |
|---|---|---|---|---|---|---|---|---|---|
| (*) : Milliéquivalents par kilogramme (**) Polymère amorphe | | | | | | | | | |

### A-2 Préparation du polymère polyamide (PA₁-AII₁-PA₁) par allongement de chaîne avec un allongeur type Y₁-A-Y₁

10 g du prépolymère ci-dessus séché et broyé, sont mélangés avec une quantité stœchiométrique de 1,3-phénylène-bis(2-oxazoline) (PBO). La quantité stoechiométrique a été déterminée par rapport à la masse molaire déterminée par RMN.

Le mélange est introduit sous balayage d'azote dans une micro-extrudeuse de marque DSM (de volume 15mL) à vis coniques co-rotatives préchauffée à T₁, telle que définie dans l'invention, sous rotation des vis à 100 tr/mn. Le mélange est laissé sous recirculation dans la micro-extrudeuse et l'augmentation de la viscosité est suivie par mesure de la force normale. Au bout de 2 minutes environ, un palier est atteint et le contenu de la micro-extrudeuse est vidangé sous forme d'un jonc. Le produit refroidi à l'air est mis sous forme de granulés.

Les caractéristiques sont présentées sur le tableau 2 suivant.

**Tableau 2 : Caractéristiques analytiques des polyamides obtenus avec allongement de chaîne (PA₁-All₁-PA₁)**

| Réf | | Prépolymère | T₁ (°C) | Tf (°C) | Tg (°C) | Tc (°C) | ΔH (J/g) | Mn 1 (déterminée par chromatographie d'exclusion stérique en équivalent PMMA) (g/mol) |
|---|---|---|---|---|---|---|---|---|
| E1 | Selon l'invention | Prépo1 | 200 | 174.7 | 34 | 142.8 | 57 | 28100 |
| E2 | Selon l'invention | Prépo2 | 280 | 262.7 | 114 | 224 | 46 | 12600 |
| E3 | Selon l'invention | Prépo3 | 200 | (*) | 110 | (*) | (*) | 28500 |
| E4 | Selon l'invention | Prépo4 | 280 | 273 | 135 | 230.5 | 36 | 9900 |

| | | | | | | | | |
|---|---|---|---|---|---|---|---|---|
| (*) Polymère amorphe | | | | | | | | |

### A-3 Préparation des exemples comparatifs PA₁

Les polyamides comparatifs dépourvus d'allongeurs de chaînes PA₁ sont synthétisés selon un protocole similaire aux prépolymères réactifs P(X₁)n : ce mode opératoire est représentatif de tous les types de polyamide de l'invention.

La masse molaire du polymère comparatif Mn₁ est ajustée selon un excès de diamine ou diacide, selon la méthode bien connue de l'homme de l'art.

Dans un réacteur autoclave de 14 litres, on introduit 5 kg des matières premières suivantes :
- 500 g d'eau,
- les diamines
- les aminoacides ou lactames
- les diacides
- 35 g d'hypophosphite de sodium en solution,
- 0,1 g d'un antimousse WACKER AK1000 (société Wacker Silicones).

La nature et rapports molaires des motifs et structures moléculaires des polyamides comparatifs (par essai référencé) sont donnés au tableau 3 ci-dessous.

Le réacteur fermé est purgé de son oxygène résiduel puis chauffé à une température de 230°C de la matière. Après 30 minutes d'agitation dans ces conditions, la vapeur sous pression qui s'est formée dans le réacteur est détendue progressivement en 60 minutes, tout en augmentant progressivement la température matière de manière à ce qu'elle s'établisse à minimum Tf + 10°C à pression atmosphérique pour les polymères semi-cristallins de Tf>230°C, ou 250°C pour les autres polymères.

Le polymère est ensuite vidangé par la vanne de fond puis refroidi dans un bac d'eau puis broyé.

Les caractéristiques sont présentées au tableau 3 suivant.

**Tableau 3 : Caractéristiques analytiques des polyamides comparatifs dépourvus d'allongeurs de chaînes PA₁**

| Réf | | Structure moléculaire et composition molaire | Monomères utilisés | Tf (°C) | Tg (°C) | Tc (°C) | ΔH (J/g) | Mn 1 (déterminée par chromatographie d'exclusion de stérique en équivalent PMMA) (g/mol)) |
|---|---|---|---|---|---|---|---|---|
| CE1 | Comparatif | 11 (100) | - Acide amino-undecanoïque | 188.5 | 47.3 | 158.4 | 72.4 | 28250 |
| | | | - Acide adipique (1 molécule par chaîne) | | | | | |
| CE2 | Comparatif | 11/6T/10T (9,1/27,3/63,6) | - Acide amino-undecanoïque | 268.5 | 114 | 236 | 58 | 12580 |
| | | | - hexaméthylenediamine | | | | | |
| | | | - decanediamine | | | | | |
| | | | - acide térephtalique | | | | | |
| CE3 | Comparatif | 6l/10l (30/70) | - hexaméthylenediamine | (*) | 108.3 | (*) | (*) | 28540 |
| | | | - decanediamine | | | | | |
| | | | - acide isophtalique | | | | | |
| CE4 | Comparatif | MXDT/10T (41.2/58.8) | - m-xylylène diamine | 279.2 | 130.7 | 43.6 | 241.4 | 10000 |
| | | | - decanediamine | | | | | |
| | | | - acide térephtalique | | | | | |

| | | | | | | | | |
|---|---|---|---|---|---|---|---|---|
| (*) Polymère amorphe | | | | | | | | |

### A-4 Comparaison des viscosités des PA selon l'invention et des PA comparatifs

Les viscosités des polymères selon l'invention (PA₁-All₁-PA₁) et des polyamides comparatifs dépourvus d'allongeurs de chaînes PA₁ sont rapportés dans les tableaux 4 à 7 suivants :

**Tableau 4 : Viscosités des essais E1 et CE1 (PA 11)**

| T (°C) | Viscosité E1 (Pa.s) | Viscosité CE1 (Pa.s) |
|---|---|---|
| 200 | 756.4 | 751.2 |
| 225 | 128.2 | 340.6 |
| 250 | 22.51 | 166.5 |
| 275 | 5.72 | 86.9 |
| 300 | 1.75 | 48 |

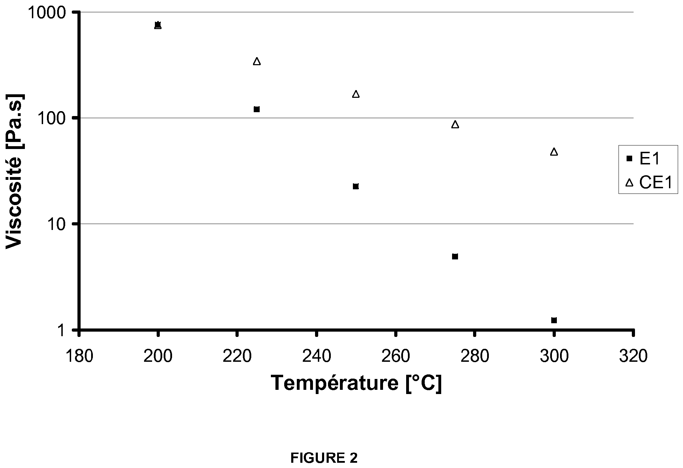

Ces résultats sont représentés dans la figure 2.

**Tableau 5 : Viscosités des essais E2 et CE2 (PA 11/6T/10T)**

| T (°C) | Viscosité E2 (Pa.s) | Viscosité CE2 (Pa.s) |
|---|---|---|
| 280 | 188 | 186 |
| 300 | 49.4 | 120 |

**Tableau 6 : Viscosités des essais E3 et CE3 (PA 6I/10I)**

| T (°C) | Viscosité E3 (Pa.s) | Viscosité CE3 (Pa.s) |
|---|---|---|
| 200 | 42080 | 42150 |
| 250 | 423 | 12600 |

**Tableau 7 : Viscosités des essais E4 et CE4 (PA MXDT/10T)**

| T (°C) | Viscosité E4 (Pa.s) | Viscosité CE4 (Pa.s) |
|---|---|---|
| 280 | 187 | 189 |
| 300 | 46.2 | 126 |

Les résultats montrent clairement que les viscosités à l'état fondu des PA selon l'invention sont plus faibles que celles des PA comparatifs pour des températures T > T₁.

## Revendications

1. Composition comprenant au moins un polymère polyamide issu d'au moins un prépolymère polyamide réactif comprenant au moins un allongeur de chaîne (PA₁-All₁-PA₁), ledit polymère polyamide étant préparé à une température T₁ supérieure ou égale à la température T_{f} ou T_{g} dudit polymère, déterminées respectivement selon la norme ISO 11357-3 et ISO 11357-2 et présentant une masse moléculaire moyenne Mn₁, telle que déterminée par chromatographie d'exclusion stérique,
**caractérisée en ce que** ladite composition présente une viscosité à l'état fondu modulable en fonction de la température à laquelle ladite composition est soumise,
ladite température étant comprise de T₂ à T₃, T₂ et T₃ étant supérieures à T₁,
et ladite viscosité à l'état fondu η'₂ ou η'₃ observée respectivement à la température T₂ ou T₃ étant inférieure à la viscosité à l'état fondu η₂ ou η₃ dudit polymère polyamide, dépourvu d'allongeur de chaîne et de même masse moléculaire moyenne Mn₁ (PA₁) observée à la même température T₂ ou T₃,
et avec :
ladite composition comprenant ou étant constituée de un ou plusieurs polyamides, y compris copolyamides statistiques ou séquencés qui sont des polymères et lesquels comprennent des motifs amides de formule A/(B)ᵣ/(C)ₛ différents, sélectionnés comme suit :
- A : est un motif amide majoritaire présent à un taux molaire allant de 55 à 95%, de préférence de 55 à 85%, plus préférentiellement de 55 à 80%, choisi parmi les motifs x.T, où x est une diamine aliphatique linéaire en C₄ à C₁₈, de préférence choisi parmi en C₆, C₉, C₁₀, C₁₁ et C₁₂ et où T est l'acide téréphtalique, ;
- B et C : sont des motifs amides répétitifs différents de A, présents dépendant de la valeur de r et s, r = 0 ou 1, s = 0 ou 1, lesdits motifs amides B et C étant choisis parmi les mêmes constituants que pour A, à la condition que lorsque r et s =1, alors B et C sont différents,
ledit motif B étant présent à un taux molaire allant de 5 à 45%, de préférence de 15 à 45%, plus préférentiellement de 20 à 45%, en fonction de la Tf du polyamide à base de motif A et ledit motif amide B est choisi parmi les motifs x'.T où x' est choisi parmi :
∘ B1) une diamine aliphatique ramifiée portant une seule ramification (ou branchement) méthyle ou éthyle et ayant une longueur de chaîne principale différente d'au moins deux atomes de carbone par rapport à la longueur de chaîne principale de la diamine x dudit motif A associé, de préférence x' étant la 2-méthyl pentaméthylène diamine (MPMD) ou
∘ B2) la m-xylylène diamine (MXD) ou
∘ B3) une diamine aliphatique linéaire en C₄ à C₁₈,
et de préférence B étant choisi parmi x'.T, où x' est la MPMD selon B1) une diamine aliphatique linéaire comme définie ci-haut selon B3) et plus préférentiellement x' est la MPMD selon B1) ou MXD selon B2) et encore plus préférentiellement MXD selon B2),
- C : motif amide optionnel différent de A et de B, à base de x'T tel que défini ci-haut pour B mais avec x' différent de x' pour le motif B,
la somme des motifs A + B + C étant égale à 100% en poids, et
ladite composition étant constituée d'un polymère polyamide issu de la polymérisation du produit de réaction de :
a1) au moins un prépolymère dudit polymère polyamide thermoplastique, porteur de n fonctions réactives terminales X₁, choisies parmi NH₂ et -CO₂H avec n étant 1 à 3, de préférence de 1 à 2, plus préférentiellement 1 ou 2, plus particulièrement 2, avec
a2) au moins un allongeur de chaîne Y₁-A'-Y₁, avec A' étant un biradical hydrocarboné, de structure non polymérique, porteur de 2 fonctions réactives terminales Y₁ identiques, réactives par polyaddition avec au moins une fonction X dudit prépolymère a1), de préférence de masse moléculaire inférieure à 500, plus préférentiellement inférieure à 400,
Y₁ est choisi parmi: oxazine, oxazolinone, oxazinone, imidazoline, époxy, maléimide, anhydride cyclique, et préférentiellement X₁ est CO₂H et Y₁ est choisi parmi un epoxy,
ladite composition étant dépourvue de fibres de renfort ainsi que d'allongeur de chaîne polymérique.

2. Composition selon la revendication 1, **caractérisée en ce que** le rapport de viscosité η'₃/η₃ à l'état fondu observée à une température T₃ est inférieur au rapport de viscosité η'₂/η₂ à l'état fondu observée à une température T₂, T₃≥T₂ + 10°C.

3. Composition selon la revendication 1, **caractérisée en ce que** le rapport de viscosité η'₃/η₃ à l'état fondu observée à une température T₃ est supérieur au rapport de viscosité η'₂/η₂ à l'état fondu observée à une température T₂, T₃≤T₂ - 10°C.

4. Composition selon l'une des revendications 1 à 3, **caractérisée en ce que** :
A est un motif amide présent à un taux molaire allant de 1 à 99%, B est un motif amide différent de A, lequel motif B est présent à un taux molaire allant de 1 à 99%, et C est un motif amide optionnel différent de A et de B et tel que défini ci-dessus.

5. Composition selon l'une des revendications 1 à 4, **caractérisée en ce que** ledit motif amide C est présent à un taux molaire allant jusqu'à 30% par rapport au taux molaire total du polymère polyamide, notamment jusqu'à 25%, particulièrement jusqu'à 20%, en particulier jusqu'à 15%.

6. Composition selon l'une des revendications 1 à 4, **caractérisée en ce que** ledit motif amide A est présent avec un taux molaire allant de 55 à 80% de préférence de 55 à 75%, plus préférentiellement de 55 à 70% par rapport à l'ensemble des motifs dudit polymère.

7. Composition selon l'une des revendications 1 à 4, **caractérisée en ce que** ledit motif B correspond à x'T avec x' choisi selon l'option B1) en particulier avec x' étant MPMD.

8. Composition selon l'une des revendications 1 à 4, **caractérisée en ce que** ledit motif B correspond à x'T avec x' choisi selon option B2), x' étant la MXD.

9. Composition selon l'une des revendications 1 à 4, **caractérisée en ce que** ledit motif B correspond à une diamine aliphatique linéaire selon l'option B3).

10. Composition selon l'une des revendications 1 à 4, **caractérisée en ce que** les motifs A et B sont sélectionnés comme suit :
- pour le motif A étant 6T, ledit motif B est sélectionné parmi : 9T, 10T, 11T, 12T, 13T, 14T, 15T, 16T, 17T et 18T, MPMD.T et MXD.T, de préférence 11T, 12T, 13T, 14T, 15T, 16T, 17T et 18T, MPMD.T et MXD.T, plus préférentiellement MPMD.T ou MXD.T, avec un taux molaire de B allant de 20 à 45%
- pour le motif A étant 9T, ledit motif B est sélectionné parmi : 6T, 10T, 11T, 12T, 13T, 14T, 15T, 16T, 17T et 18T, MPMD.T et MXD.T, de préférence 11T, 12T, 13T, 14T, 15T, 16T, 17T et 18T, MPMD.T et MXD.T, plus préférentiellement MPMD.T ou MXD.T, avec un taux molaire de B allant de 30 à 45%
- pour le motif A étant 10T, ledit motif B est sélectionné parmi : 6T, 9T, 11T, 12T, 13T, 14T, 15T, 16T, 17T et 18T, MPMD.T et MXD.T, de préférence 12T, 13T, 14T, 15T, 16T, 17T et 18T, MPMD.T et MXD.T, plus préférentiellement MPMD.T ou MXD.T, avec un taux molaire de B allant de 25 à 45%
- pour le motif A étant 11T, ledit motif B est sélectionné parmi : 6T, 9T, 10T, 12T, 13T, 14T, 15T, 16T, 17T et 18T, MPMD.T et MXD.T, de préférence 9T, 13T, 15T, 16T, 17T et 18T, MPMD.T et MXD.T, plus préférentiellement MPMD.T ou MXD.T, avec un taux molaire de B allant de 20 à 45%
- pour le motif A étant 12T, ledit motif B est sélectionné parmi : 6T, 9T, 10T, 11T, 13T, 14T, 15T, 16T, 17T et 18T, MPMD.T et MXD.T, de préférence 9T, 10T, 14T, 15T, 16T, 17T et 18T, MPMD.T et MXD.T, plus préférentiellement MPMD.T ou MXD.T, avec un taux molaire de B allant de 20 à 45%.

11. Composition selon la revendication 10, **caractérisée en ce que** le motif A est un motif 6T, ledit motif B est sélectionné parmi : 9T, 10T, 11T, 12T, 13T, 14T, 15T, 16T, 17T et 18T, MPMD.T et MXD.T, de préférence 11T, 12T, 13T, 14T, 15T, 16T, 17T et 18T, MPMD.T et MXD.T, plus préférentiellement MPMD.T ou MXD.T, avec un taux molaire de B allant de 20 à 45%

12. Composition selon la revendication 10, **caractérisée en ce que** le motif A est un motif 9T et le motif B est sélectionné parmi : 10T, 11T, 12T, 13T, 14T, 15T, 16T, 17T et 18T, MPMD.T et MXD.T, de préférence 11T, 12T, 13T, 14T, 15T, 16T, 17T et 18T, MPMD.T et MXD.T, plus préférentiellement MPMD.T ou MXD.T, avec un taux molaire de B allant de 30 à 45%.

13. Composition selon la revendication 10, **caractérisée en ce que** le motif A est un motif 10T et le motif B est sélectionné parmi : 9T, 11T, 12T, 13T, 14T, 15T, 16T, 17T et 18T, MPMD.T et MXD.T, de préférence 12T, 13T, 14T, 15T, 16T, 17T et 18T, MPMD.T, plus préférentiellement MPMD.T ou MXD.T et MXD.T avec un taux molaire de B allant de 25 à 45%.

14. Composition selon la revendication 10, **caractérisée en ce que** le motif A est un motif 11T et le motif B est sélectionné parmi : 9T, 10T, 12T, 13T, 14T, 15T, 16T, 17T et 18T, MPMD.T et MXD.T, de préférence 9T, 13T, 15T, 16T, 17T et 18T, MPMD.T et MXD.T, plus préférentiellement MPMD.T ou MXD.T, avec un taux molaire de B allant de 20 à 45%.

15. Composition selon la revendication 10, **caractérisée en ce que** le motif A est un motif 12T et le motif B est sélectionné parmi : 9T, 10T, 11T, 13T, 14T, 15T, 16T, 17T et 18T, MPMD.T et MXD.T, de préférence 9T, 10T, 14T, 15T, 16T, 17T et 18T, MPMD.T et MXD.T, plus préférentiellement MPMD.T ou MXD.T, avec un taux molaire de B allant de 20 à 45%.

16. Composition selon l'une des revendications 1 à 15, **caractérisée en ce que** lesdits prépolymères réactifs de ladite composition a) ont une masse moléculaire moyenne en nombre Mn allant de 500 à 10000, de préférence de 1000 à 6000.

17. Composition selon l'une des revendications 1 à 16, **caractérisée en ce que** ledit polymère polyamide présente une masse moléculaire moyenne modulable en fonction de la température à laquelle ledit polymère polyamide est soumis.

18. Polymère polyamide issu d'un prépolymère polyamide comprenant un allongeur de chaîne, tel que défini dans lune des revendications 1 à 17.

19. Procédé de fabrication d'un matériau composite thermoplastique, en particulier d'une pièce mécanique ou d'une pièce de structure à base dudit matériau, de composition telle que définie selon l'une des revendications 1 à 18, **caractérisé en ce qu'**il comprend au moins une étape de moulage ou de mise en oeuvre d'au moins une composition telle que définie selon la revendication 1 à 18, à une température T permettant l'obtention d'une viscosité η désirée.

20. Procédé selon la revendication 19, **caractérisé en ce qu'**il comprend les étapes suivantes :
i) imprégnation à l'état fondu d'un renfort fibreux par une composition telle que définie selon l'une des revendications 1 à 17 mais ne comprenant pas de renfort fibreux, dans un moule ouvert ou fermé ou hors moule, afin d'obtenir des fibres imprégnées de ladite composition,
ii) mise en oeuvre ou moulage de ladite composition de l'étape i) pour former la pièce composite finale dans un moule ou avec un autre système de mise en oeuvre.

21. Procédé selon la revendication 20, caractérisé en ce ladite mise en oeuvre est réalisée selon un procédé RTM, S-RIM, injection-compression, pultrusion ou par infusion.

22. Procédé selon la revendication 20, **caractérisé en ce que** ladite mise en oeuvre est réalisée selon un procédé de thermocompression de préimprégné sous pression réduite.

23. Matériau composite thermoplastique **caractérisé en ce qu'**il résulte de l'utilisation d'au moins une composition pour matériau composite thermoplastique telle que définie selon l'une des revendications 1 à 17.

24. Pièce mécanique ou de structure de matériau composite thermoplastique, **caractérisée en ce qu'**elle résulte de l'utilisation d'au moins une composition telle que définie selon l'une des revendications 1 à 17 ou qu'elle est à base d'un matériau composite tel que défini selon la revendication 23 ou qu'elle est obtenue par un procédé tel que défini selon l'une des revendications 20 à 22.

25. Pièce de structure selon la revendication 24, **caractérisée en ce qu'**il s'agit d'une pièce automobile post-traitée par cataphorèse.

26. Pièce selon la revendication 24, **caractérisée en ce qu'**il s'agit d'une pièce pour éolienne.

27. Pièce selon la revendication 24, **caractérisée en ce qu'**il s'agit d'une pièce pour l'aéronautique.

## Patentansprüche

1. Zusammensetzung, umfassend mindestens ein Polyamidpolymer, welches von mindestens einem reaktiven Polyamidprepolymer stammt, umfassend mindestens einen Kettenverlängerer (PA₁-All₁-PA₁), wobei das Polyamidpolymer bei einer Temperatur T₁ größer oder gleich der Temperatur T_{f} oder T_{g} des Polymers hergestellt wird, die jeweils gemäß der Norm ISO 11357-3 und ISO 11357-2 bestimmt werden, und eine mittlere Molekularmasse Mn₁, wie durch sterische Ausschlusschromatographie bestimmt, aufweist,
**dadurch gekennzeichnet, dass** die Zusammensetzung eine Viskosität im geschmolzenen Zustand aufweist, die als Funktion der Temperatur, der die Zusammensetzung ausgesetzt wird, modulierbar ist, wobei die Temperatur von T₂ bis T₃ beträgt, wobei T₂ und T₃ größer als T₁ sind,
und wobei die Viskosität im geschmolzenen Zustand η'₂ oder η'₃, die jeweils bei der Temperatur T₂ oder T₃ beobachtet wird, kleiner ist als die Viskosität im geschmolzenen Zustand η₂ oder η₃ des Polyamidpolymers ohne den Kettenverlängerer und mit derselben mittleren Molekularmasse Mn₁ (PA₁), die bei derselben Temperatur T₂ oder T₃ beobachtet wird, und wobei:
die Zusammensetzung ein oder mehrere Polyamide umfasst oder daraus besteht, einschließlich statistischer oder sequenzierter Copolyamide, die Polymere sind und die verschiedene Amideinheiten der Formel A/(B)ᵣ/(C)ₛ umfassen, ausgewählt wie folgt:
- A: ist eine Amideinheit, die mehrheitlich in einem Molverhältnis von 55 bis 95 %, vorzugsweise von 55 bis 85 %, bevorzugter von 55 bis 80 %, vorhanden ist, ausgewählt aus den Einheiten x.T, wobei x ein lineares aliphatisches C₄-C₁₈-Diamin ist, vorzugsweise ausgewählt aus C₆, C₉, C₁₀, C₁₁ und C₁₂, und wobei T Terephthalsäure ist,
- B und C: sind andere Amid-Wiederholungseinheiten als A, in Abhängigkeit vom Wert von r und s vorhanden, r = 0 oder 1, s = 0 oder 1, wobei die Amideinheiten B und C aus denselben Bestandteilen ausgewählt sind wie für A, mit der Maßgabe, dass, wenn r und s = 1, dann B und C verschieden sind,
wobei die Einheit B in einem Molverhältnis von 5 bis 45 %, vorzugsweise von 15 bis 45 %, bevorzugter von 20 bis 45 %, vorhanden ist, als Funktion der Tf des Polyamids auf der Basis der Einheit A, und die Amideinheit B ausgewählt ist aus den Einheiten x'.T, wobei x' ausgewählt ist aus:
∘ B1) einem verzweigten aliphatischen Diamin, das eine einzelne Ramifikation (oder Verzweigung) Methyl oder Ethyl trägt und eine Hauptkettenlänge aufweist, die um mindestens zwei Kohlenstoffatomen im Verhältnis zur Hauptkettenlänge des Diamins x der assoziierten Einheit A verschieden ist, wobei vorzugsweise x' 2-Methylpentamethylendiamin (MPMD) ist, oder
∘ B2) m-Xylylendiamin (MXD) oder
∘ B3) einem linearen aliphatischen C₄-C₁₈-Diamin,
und wobei vorzugsweise B ausgewählt ist aus x'.T, wobei x' MPMD gemäß B1) ein lineares aliphatisches Diamin wie oben gemäß B3) definiert ist, und bevorzugter x' MPMD gemäß B1) oder MXD gemäß B2) und noch bevorzugter MXD gemäß B2) ist,
- C: eine optionale andere Amideinheit als A und B auf der Basis von x'T, wie oben für B definiert, ist, wobei jedoch x' von x' für die Einheit B verschieden ist,
wobei die Summe der Einheiten A + B + C gleich 100 Gew.-% ist, und
wobei die Zusammensetzung ein Polyamidpolymer umfasst oder daraus besteht, das aus der Polymerisation des Reaktionsprodukts von:
a1) mindestens einem Prepolymer des thermoplastischen Polyamidpolymers, das n reaktive terminale Funktionen X₁ trägt, ausgewählt aus NH₂ und -CO₂H, wobei n 1 bis 3, vorzugsweise 1 bis 2, bevorzugter 1 oder 2, insbesondere 2, ist, mit
a2) mindestens einem Kettenverlängerer Y₁-A'-Y₁, wobei A' ein zweiwertiger Kohlenwasserstoffrest ist, mit einer Nicht-Polymer-Struktur, der 2 identische reaktive terminale Funktionen Y₁ trägt, reaktiv durch Polyaddition mit mindestens einer Funktion X des Prepolymers a1), vorzugsweise mit einer Molekularmasse von weniger als 500, bevorzugter weniger als 400,
stammt,
Y₁ ausgewählt ist aus: Oxazin, Oxazolinon, Oxazinon, Imidazolin, Epoxy, Maleimid, cyclischem Anhydrid, und vorzugsweise X₁ CO₂H ist, und Y₁ aus Epoxy ausgewählt ist,
wobei die Zusammensetzung keine Verstärkungsfasern sowie keinen Polymerkettenverlängerer aufweist.

2. Zusammensetzung nach Anspruch 1, **dadurch gekennzeichnet, dass** das Verhältnis der Viskosität η'₃/η₃ im geschmolzenen Zustand, die bei einer Temperatur T₃ beobachtet wird, kleiner ist als das Verhältnis der Viskosität η'₂/η₂ im geschmolzenen Zustand, die bei einer Temperatur T₂ beobachtet wird, wobei T₃ ≥ T₂ + 10 °C.

3. Zusammensetzung nach Anspruch 1, **dadurch gekennzeichnet, dass** das Verhältnis der Viskosität η'₃/η₃ im geschmolzenen Zustand, die bei einer Temperatur T₃ beobachtet wird, größer ist als das Verhältnis der Viskosität η'₂/η₂ im geschmolzenen Zustand, die bei einer Temperatur T₂ beobachtet wird, wobei T₃ ≤ T₂ - 10 °C.

4. Zusammensetzung nach einem der Ansprüche 1 bis 3, **dadurch gekennzeichnet, dass** A eine Amideinheit ist, die in einem Molverhältnis von 1 bis 99 ö vorhanden ist, B eine andere Amideinheit als A ist, die Einheit B in einem Molverhältnis von 1 bis 99 ö vorhanden ist, und C eine optionale andere Amideinheit als A und B ist, und wie oben definiert.

5. Zusammensetzung nach einem der Ansprüche 1 bis 4, **dadurch gekennzeichnet, dass** die Amideinheit C in einem Molverhältnis von bis zu 30 %, bezogen auf das Gesamtmolverhältnis des Polyamidpolymers, insbesondere bis zu 25 %, vorzugsweise bis zu 20 %, besonders bis zu 15 %, vorhanden ist.

6. Zusammensetzung nach einem der Ansprüche 1 bis 4, **dadurch gekennzeichnet, dass** die Amideinheit A mit einem Molverhältnis von 55 bis 80 %, vorzugsweise von 55 bis 75 %, bevorzugter von 55 bis 70 %, bezogen auf die Gesamtheit der Einheiten des Polymers, vorhanden ist.

7. Zusammensetzung nach einem der Ansprüche 1 bis 4, **dadurch gekennzeichnet, dass** die Einheit B x'T entspricht, wobei x' gemäß Option B1) ausgewählt ist, wobei insbesondere x' MPMD ist.

8. Zusammensetzung nach einem der Ansprüche 1 bis 4, **dadurch gekennzeichnet, dass** die Einheit B x'T entspricht, wobei x' gemäß Option B2) ausgewählt ist, wobei x' MXD ist.

9. Zusammensetzung nach einem der Ansprüche 1 bis 4, **dadurch gekennzeichnet, dass** die Einheit B einem linearen aliphatischen Diamin gemäß Option B3) entspricht.

10. Zusammensetzung nach einem der Ansprüche 1 bis 4, **dadurch gekennzeichnet, dass** die Einheiten A und B wie folgt ausgewählt sind:
- für die Einheit A, die 6T ist, wird die Einheit B ausgewählt aus: 9T, 10T, 11T, 12T, 13T, 14T, 15T, 16T, 17T und 18T, MPMD.T und MXD.T, vorzugsweise 11T, 12T, 13T, 14T, 15T, 16T, 17T und 18T, MPMD.T und MXD.T, bevorzugter MPMD.T oder MXD.T, mit einem Molverhältnis von B von 20 bis 45 %,
- für die Einheit A, die 9T ist, wird die Einheit B ausgewählt aus: 6T, 10T, 11T, 12T, 13T, 14T, 15T, 16T, 17T und 18T, MPMD.T und MXD.T, vorzugsweise 11T, 12T, 13T, 14T, 15T, 16T, 17T und 18T, MPMD.T und MXD.T, bevorzugter MPMD.T oder MXD.T, mit einem Molverhältnis von B von 30 bis 45 %,
- für die Einheit A, die 10T ist, wird die Einheit B ausgewählt aus: 6T, 9T, 11T, 12T, 13T, 14T, 15T, 16T, 17T und 18T, MPMD.T und MXD.T, vorzugsweise 12T, 13T, 14T, 15T, 16T, 17T und 18T, MPMD.T und MXD.T, bevorzugter MPMD.T oder MXD.T, mit einem Molverhältnis von B von 25 bis 45 %,
- für die Einheit A, die 11T ist, wird die Einheit B ausgewählt aus: 6T, 9T, 10T, 12T, 13T, 14T, 15T, 16T, 17T und 18T, MPMD.T und MXD.T, vorzugsweise 9T, 13T, 15T, 16T, 17T und 18T, MPMD.T und MXD.T, bevorzugter MPMD.T oder MXD.T, mit einem Molverhältnis von B von 20 bis 45 %,
- für die Einheit A, die 12T ist, wird die Einheit B ausgewählt aus: 6T, 9T, 10T, 11T, 13T, 14T, 15T, 16T, 17T und 18T, MPMD.T und MXD.T, vorzugsweise 9T, 10T, 14T, 15T, 16T, 17T und 18T, MPMD.T und MXD.T, bevorzugter MPMD.T oder MXD.T, mit einem Molverhältnis von B von 20 bis 45 %.

11. Zusammensetzung nach Anspruch 10, **dadurch gekennzeichnet, dass** die Einheit A eine Einheit 6T ist, die Einheit B ausgewählt ist aus: 9T, 10T, 11T, 12T, 13T, 14T, 15T, 16T, 17T und 18T, MPMD.T und MXD.T, vorzugsweise 11T, 12T, 13T, 14T, 15T, 16T, 17T und 18T, MPMD.T und MXD.T, bevorzugter MPMD.T oder MXD.T, mit einem Molverhältnis von B von 20 bis 45 %.

12. Zusammensetzung nach Anspruch 10, **dadurch gekennzeichnet, dass** die Einheit A eine Einheit 9T ist, und die Einheit B ausgewählt ist aus: 10T, 11T, 12T, 13T, 14T, 15T, 16T, 17T und 18T, MPMD.T und MXD.T, vorzugsweise 11T, 12T, 13T, 14T, 15T, 16T, 17T und 18T, MPMD.T und MXD.T, bevorzugter MPMD.T oder MXD.T, mit einem Molverhältnis von B von 30 bis 45 %.

13. Zusammensetzung nach Anspruch 10, **dadurch gekennzeichnet, dass** die Einheit A eine Einheit 10T ist, und die Einheit B ausgewählt ist aus: 9T, 11T, 12T, 13T, 14T, 15T, 16T, 17T und 18T, MPMD.T und MXD.T, vorzugsweise 12T, 13T, 14T, 15T, 16T, 17T und 18T, MPMD.T, bevorzugter MPMD.T oder MXD.T und MXD.T, mit einem Molverhältnis von B von 25 bis 45 %.

14. Zusammensetzung nach Anspruch 10, **dadurch gekennzeichnet, dass** die Einheit A eine Einheit 11T ist, und die Einheit B ausgewählt ist aus: 9T, 10T, 12T, 13T, 14T, 15T, 16T, 17T und 18T, MPMD.T und MXD.T, vorzugsweise 9T, 13T, 15T, 16T, 17T und 18T, MPMD.T und MXD.T, bevorzugter MPMD.T oder MXD.T, mit einem Molverhältnis von B von 20 bis 45 %.

15. Zusammensetzung nach Anspruch 10, **dadurch gekennzeichnet, dass** die Einheit A eine Einheit 12T ist, und die Einheit B ausgewählt ist aus: 9T, 10T, 11T, 13T, 14T, 15T, 16T, 17T und 18T, MPMD.T und MXD.T, vorzugsweise 9T, 10T, 14T, 15T, 16T, 17T und 18T, MPMD.T und MXD.T, bevorzugter MPMD.T oder MXD.T, mit einem Molverhältnis von B von 20 bis 45 %.

16. Zusammensetzung nach einem der Ansprüche 1 bis 15, **dadurch gekennzeichnet, dass** die reaktiven Prepolymere der Zusammensetzung a) eine zahlenmittlere Molekularmasse Mn von 500 bis 10.000, vorzugsweise von 1000 bis 6000, aufweisen.

17. Zusammensetzung nach einem der Ansprüche 1 bis 16, **dadurch gekennzeichnet, dass** das Polyamidpolymer eine mittlere Molekularmasse aufweist, die als Funktion der Temperatur modulierbar ist, der das Polyamidpolymer ausgesetzt wird.

18. Polyamidpolymer, das von einem Polyamidprepolymer stammt, umfassend einen Kettenverlängerer gemäß der Definition in einem der Ansprüche 1 bis 17.

19. Verfahren zur Herstellung eines thermoplastischen Verbundmaterials, insbesondere eines mechanischen Teils oder Strukturteils auf Basis des Materials, mit einer Zusammensetzung, wie gemäß einem der Ansprüche 1 bis 18 definiert, **dadurch gekennzeichnet, dass** es mindestens einen Schritt des Formens oder Verarbeitens mindestens einer Zusammensetzung, wie gemäß Anspruch 1 bis 18 definiert, bei einer Temperatur T, die den Erhalt einer gewünschten Viskosität η ermöglicht, umfasst.

20. Verfahren nach Anspruch 19, **dadurch gekennzeichnet, dass** es die folgenden Schritte umfasst:
i) Schmelzimprägnieren einer Faserverstärkung mit einer Zusammensetzung, wie gemäß einem der Ansprüche 1 bis 17 definiert, die aber keine Faserverstärkung umfasst, in einer offenen oder geschlossenen Form oder formfrei, um mit der Zusammensetzung imprägnierte Fasern zu erhalten,
ii) Verarbeiten oder Formen der Zusammensetzung aus Schritt i) zur Bildung des endgültigen Verbundteils in einer Form oder mit einem anderen Herstellungssystem.

21. Verfahren nach Anspruch 20, **dadurch gekennzeichnet, dass** das Verarbeiten gemäß einem RTM-, S-RIM-, Spritzpress-, Pultrusions- oder Spritzverfahren durchgeführt wird.

22. Verfahren nach Anspruch 20, **dadurch gekennzeichnet, dass** das Verarbeiten gemäß einem Verfahren des Thermopressens eines Vorimprägnats unter vermindertem Druck durchgeführt wird.

23. Thermoplastisches Verbundmaterial, **dadurch gekennzeichnet, dass** es sich aus der Verwendung mindestens einer Zusammensetzung, wie gemäß einem der Ansprüche 1 bis 17 definiert, als thermoplastisches Verbundmaterial ergibt.

24. Mechanisches Teil oder Strukturteil aus thermoplastischem Verbundmaterial, **dadurch gekennzeichnet, dass** es sich aus der Verwendung mindestens einer Zusammensetzung, wie gemäß einem der Ansprüche 1 bis 17 definiert, ergibt oder auf einem Verbundmaterial, wie gemäß Anspruch 23 definiert, basiert oder durch ein Verfahren, wie gemäß einem der Ansprüche 20 bis 22 definiert, erhalten wird.

25. Strukturteil nach Anspruch 24, **dadurch gekennzeichnet, dass** es sich um ein durch Kataphorese nachbehandeltes Autoteil handelt.

26. Teil nach Anspruch 24, **dadurch gekennzeichnet, dass** es sich um ein Teil für Windkraftanlagen handelt.

27. Teil nach Anspruch 24, **dadurch gekennzeichnet, dass** es sich um ein Teil für die Luftfahrt handelt.

## Claims

1. Composition comprising at least one polyamide polymer derived from at least one reactive polyamide prepolymer comprising at least one chain extender (PA₁-All₁-PA₁), said polyamide polymer being prepared at a temperature T₁ greater than or equal to the temperature Tₘ or T_{g} of said polymer, determined respectively according to standards ISO 11357-3 and ISO 11357-2, and having an average molecular weight Mn₁, as determined by size exclusion chromatography,
**characterized in that** said composition has a melt viscosity which can be modulated according to the temperature to which said composition is subjected, said temperature being included from T₂ to T₃, T₂ and T₃ being greater than T₁,
and said melt viscosity η'₂ or η'₃ observed respectively at the temperature T₂ or T₃ being less than the melt viscosity η₂ or η₃ of said polyamide polymer, free of chain extender and having the same average molecular weight Mn₁ (PA₁) observed at the same temperature T₂ or T3,
and with:
said composition comprising or consisting of one or more polyamides, including random or block copolyamides which are polymers and which comprise different amide units of formula A/(B)ᵣ/(C)ₛ, selected as follows:
- A: is a major amide unit present in a molar content ranging from 55% to 95%, preferably from 55% to 85%, more preferentially from 55% to 80%, chosen from x.T units, where x is a linear aliphatic C₄ to C₁₈ diamine, preferably chosen from C₆, C₉, C₁₀, C₁₁ and C₁₂ and where T is terephthalic acid,
- B and C: are repeating amide units different than A, present depending on the value of r and s, r = 0 or 1, s = 0 or 1, said amide units B and C being chosen from the same constituents as for A, on the condition that when r and s =1, then B and C are different,
said unit B being present in a molar content ranging from 5% to 45%, preferably from 15% to 45%, more preferentially from 20% to 45%, depending on the Tm of the polyamide based on unit A and said amide unit B is chosen from x'.T units where x' is chosen from:
∘ B1) a branched aliphatic diamine bearing a single methyl or ethyl branch (or branching) and having a main chain length different by at least two carbon atoms compared with the main chain length of the diamine x of said associated unit A, preferably x' being 2-methylpentamethylenediamine (MPMD) or
∘ B2) m-xylylenediamine (MXD) or
∘ B3) a linear aliphatic C₄ to C₁₈ diamine,
and preferably B being chosen from x'.T, where x' is MPMD according to B1) a linear aliphatic diamine as defined above according to B3) and more preferentially x' is MPMD according to B1) or MXD according to B2) and even more preferentially MXD according to B2),
- C: optional amide unit different than A and than B, based on x'T as defined above for B but with x' different than x' for the unit B,
the sum of the units A + B + C being equal to 100% by weight, and
said composition consisting of a polyamide polymer resulting from the polymerization of the reaction product of:
a1) at least one prepolymer of said thermoplastic polyamide polymer, bearing n reactive end functions X₁, chosen from NH₂ and -CO₂H with n being 1 to 3, preferably from 1 to 2, more preferentially 1 or 2, more particularly 2, with
a2) at least one chain extender Y₁-A'-Y₁, with A' being a hydrocarbon-based biradical of non-polymeric structure, bearing 2 identical end reactive functions Y₁, reactive by polyaddition with at least one function X of said prepolymer a1), preferably having a molecular weight of less than 500, more preferentially less than 400,
Y₁ is chosen from: oxazine, oxazolinone, oxazinone, imidazoline, epoxy, maleimide, cyclic anhydride, and preferentially X₁ is CO₂H and Y₂ is chosen from an epoxy, said composition being free of reinforcing fibres and also of polymeric chain extender.

2. Composition according to Claim 1, **characterized in that** the ratio of melt viscosity η'₃/η₃ observed at a temperature T₃ is lower than the ratio of melt viscosity η'₂/η₂ observed at a temperature T₂, T₃≥T₂ + 10°C.

3. Composition according to Claim 1, **characterized in that** the ratio of melt viscosity η'₃/η₃ observed at a temperature T₃ is higher than the ratio of melt viscosity η'₂/η₂ observed at a temperature T₂, T₃≤T₂ - 10°C.

4. Composition according to one of Claims 1 to 3, **characterized in that**:
A is an amide unit present in a molar content ranging from 1% to 99%, B is an amide unit different than A, said unit B being present in a molar content ranging from 1% to 99%, and C is an optional amide unit different than A and than B and as defined above.

5. Composition according to one of Claims 1 to 4, **characterized in that** said amide unit C is present in a molar content ranging up to 30% relative to the total molar content of the polyamide polymer, in particular up to 25%, particularly up to 20%, in particular up to 15%.

6. Composition according to one of Claims 1 to 4, **characterized in that** said amide unit A is present with a molar content ranging from 55% to 80%, preferably from 55% to 75%, more preferentially from 55% to 70%, relative to all of the units of said polymer.

7. Composition according to one of Claims 1 to 4, **characterized in that** said unit B corresponds to x'T with x' chosen according to option B1), in particular with x' being MPMD.

8. Composition according to one of Claims 1 to 4, **characterized in that** said unit B corresponds to x'T with x' chosen according to option B2), x' being MXD.

9. Composition according to one of Claims 1 to 4, **characterized in that** said unit B corresponds to a linear aliphatic diamine according to option B3).

10. Composition according to one of Claims 1 to 4, **characterized in that** the units A and B are selected as follows:
- for the unit A which is 6T, said unit B is selected from: 9T, 10T, 11T, 12T, 13T, 14T, 15T, 16T, 17T and 18T, MPMD.T and MXD.T, preferably 11T, 12T, 13T, 14T, 15T, 16T, 17T and 18T, MPMD.T and MXD.T, more preferentially MPMD.T or MXD.T, with a molar content of B ranging from 20% to 45%,
- for the unit A which is 9T, said unit B is selected from: 6T, 10T, 11T, 12T, 13T, 14T, 15T, 16T, 17T and 18T, MPMD.T and MXD.T, preferably 11T, 12T, 13T, 14T, 15T, 16T, 17T and 18T, MPMD.T and MXD.T, more preferentially MPMD.T or MXD.T, with a molar content of B ranging from 30% to 45%,
- for the unit A which is 10T, said unit B is selected from: 6T, 9T, 11T, 12T, 13T, 14T, 15T, 16T, 17T and 18T, MPMD.T and MXD.T, preferably 12T, 13T, 14T, 15T, 16T, 17T and 18T, MPMD.T and MXD.T, more preferentially MPMD.T or MXD.T, with a molar content of B ranging from 25% to 45%,
- for the unit A which is 11T, said unit B is selected from: 6T, 9T, 10T, 12T, 13T, 14T, 15T, 16T, 17T and 18T, MPMD.T and MXD.T, preferably 9T, 13T, 15T, 16T, 17T and 18T, MPMD.T and MXD.T, more preferentially MPMD.T or MXD.T, with a molar content of B ranging from 20% to 45%,
- for the unit A which is 12T, said unit B is selected from: 6T, 9T, 10T, 11T, 13T, 14T, 15T, 16T, 17T and 18T, MPMD.T and MXD.T, preferably 9T, 10T, 14T, 15T, 16T, 17T and 18T, MPMD.T and MXD.T, more preferentially MPMD.T or MXD.T, with a molar content of B ranging from 20% to 45%.

11. Composition according to Claim 10, **characterized in that** the unit A is a unit 6T and said unit B is selected from: 9T, 10T, 11T, 12T, 13T, 14T, 15T, 16T, 17T and 18T, MPMD.T and MXD.T, preferably 11T, 12T, 13T, 14T, 15T, 16T, 17T and 18T, MPMD.T and MXD.T, more preferentially MPMD.T or MXD.T, with a molar content of B ranging from 20% to 45%.

12. Composition according to Claim 10, **characterized in that** the unit A is a unit 9T and the unit B is selected from: 10T, 11T, 12T, 13T, 14T, 15T, 16T, 17T and 18T, MPMD.T and MXD.T, preferably 11T, 12T, 13T, 14T, 15T, 16T, 17T and 18T, MPMD.T and MXD.T, more preferentially MPMD.T or MXD.T, with a molar content of B ranging from 30% to 45%.

13. Composition according to Claim 10, **characterized in that** the unit A is a unit 10T and the unit B is selected from: 9T, 11T, 12T, 13T, 14T, 15T, 16T, 17T and 18T, MPMD.T and MXD.T, preferably 12T, 13T, 14T, 15T, 16T, 17T and 18T, MPMD.T, more preferentially MPMD.T or MXD.T and MXD.T, with a molar content of B ranging from 25% to 45%.

14. Composition according to Claim 10, **characterized in that** the unit A is a unit 11T and the unit B is selected from: 9T, 10T, 12T, 13T, 14T, 15T, 16T, 17T and 18T, MPMD.T and MXD.T, preferably 9T, 13T, 15T, 16T, 17T and 18T, MPMD.T and MXD.T, more preferentially MPMD.T or MXD.T, with a molar content of B ranging from 20% to 45%.

15. Composition according to Claim 10, **characterized in that** the unit A is a unit 12T and the unit B is selected from: 9T, 10T, 11T, 13T, 14T, 15T, 16T, 17T and 18T, MPMD.T and MXD.T, preferably 9T, 10T, 14T, 15T, 16T, 17T and 18T, MPMD.T and MXD.T, more preferentially MPMD.T or MXD.T, with a molar content of B ranging from 20% to 45%.

16. Composition according to one of Claims 1 to 15, **characterized in that** said reactive prepolymers of said composition a) have a number-average molecular weight Mn ranging from 500 to 10 000, preferably from 1000 to 6000.

17. Composition according to one of Claims 1 to 16, **characterized in that** said polyamide polymer has an average molecular weight which can be modulated according to the temperature to which said polyamide polymer is subjected.

18. Polyamide polymer derived from a polyamide prepolymer comprising a chain extender, as defined in one of Claims 1 to 17.

19. Process for the manufacture of a thermoplastic composite material, in particular of a mechanical part or of a structural part based on said material, with a composition as defined according to one of Claims 1 to 18, **characterized in that** it comprises at least one step of moulding or of processing of at least one composition as defined according to Claim 1 to 18, at a temperature T which makes it possible to obtain a desired viscosity η.

20. Process according to Claim 19, **characterized in that** it comprises the following steps:
i) melt impregnation of a fibrous reinforcer by a composition as defined according to one of Claims 1 to 17 but not comprising fibrous reinforcer, in an open or closed mould or out of mould, in order to obtain fibres impregnated with said composition,
ii) processing or moulding of said composition of step i) to form the final composite part in a mould or with another processing system.

21. Process according to Claim 20, **characterized in that** said processing is carried out according to an RTM, S-RIM, injection/compression moulding or pultrusion process or by infusion.

22. Process according to Claim 20, **characterized in that** said processing is carried out according to a process of prepreg thermocompression under reduced pressure.

23. Thermoplastic composite material, **characterized in that** it results from the use of at least one composition for thermoplastic composite material as defined according to one of Claims 1 to 17.

24. Mechanical or structural part of thermoplastic composite material, **characterized in that** it results from the use of at least one composition as defined according to one of Claims 1 to 17 or that it is based on a composite material as defined according to Claim 23 or that it is obtained by a process as defined according to one of Claims 20 to 22.

25. Structural part according to Claim 24, **characterized in that** it is a motor vehicle part post-treated by cataphoresis.

26. Part according to Claim 24, **characterized in that** it is a part for wind power.

27. Part according to Claim 24, **characterized in that** it is a part for aeronautics.
